# EUROPÄISCHE PATENTSCHRIFT

(11) **EP 2 120 652 B1**
(45) Veröffentlichungstag und Bekanntmachung des Hinweises auf die Patenterteilung: **21.12.2011**
(21) Anmeldenummer: 08707456.3
(22) Anmeldetag: 31.01.2008
(51) Int. Cl.: A47J 31/00, A47J 31/54

(54) **VORRICHTUNG ZUR HEISSWASSER- ODER DAMPFERZEUGUNG FÜR INSBESONDERE FAHRZEUGE, INSBESONDERE KRAFTFAHRZEUGE**
DEVICE FOR PRODUCING HOT WATER OR WATER VAPOUR ESPECIALLY FOR VEHICLES, ESPECIALLY MOTOR VEHICLES
DISPOSITIF DE PRODUCTION D'EAU CHAUDE OU DE VAPEUR, NOTAMMENT POUR VÉHICULES, EN PARTICULIER VÉHICULES AUTOMOBILES

(30) Priorität: 12.02.2007 DE 102007007394
(43) Veröffentlichungstag der Anmeldung: 25.11.2009
(73) Patentinhaber: Volkswagen Aktiengesellschaft, 38436 Wolfsburg (DE)
(72) Erfinder: ANDRONIS, Odysseus, 38302 Wolfenbüttel (DE); LAMMEL, Ulrich, 38436 Wolfsburg (DE); HACKENBERG, Ulrich, 85139 Wettstetten (DE)
(86) Internationale Anmeldenummer: PCT/EP2008/000769
(87) Internationale Veröffentlichungsnummer: WO 2008/098683

(56) Entgegenhaltungen:
- EP-A1- 0 156 719
- WO-A-01/72187
- AU-A- 1 864 870
- FR-A- 2 506 592
- GB-A- 1 417 467
- GB-A- 2 066 433
- GB-A- 2 394 215
- US-A- 4 057 892

## Beschreibung

Die Erfindung betrifft eine Anordnung einer Vorrichtung zur Heißwasser- oder Dampferzeugung nach dem Oberbegriff des Anspruchs 1.

Der Einsatz von Vorrichtungen zur Heißwassererzeugung ist in Fahrzeugen in Verbindung mit der Herstellung von Aufgussgetränken, wie beispielsweise Kaffee, bereits bekannt. So ist es beispielsweise aus der DE 103 47 047 A1 bekannt, in einem Kofferraum eines Kraftfahrzeugs einen Wasserbehälter mitsamt Pumpe und Heizeinrichtung anzuordnen, so dass von dort aus erhitztes Wasser über eine entsprechende Zuführleitung zu einer Brüheinheit, die im Fahrgastraum angeordnet ist, zugeführt werden kann. In diese Brüheinheit lassen sich Kaffee- oder Tee-Tabs einfügen, die dann von dem erhitzten Wasser durchströmt werden, um Kaffee oder Tee zur Verfügung zu stellen, das als Extrakt dann über eine weitere Zuführleitung zu einer auf einem Tassenhalter positionierten Tasse geführt wird, wo es in üblicher Weise von oben her in die Tasse eintropft. Der Tassenhalter ist hier Bestandteil eines Restebehälters, in dem Extraktreste bzw. sonstiger Abfall entsorgt werden können. Eine derartige Vorrichtung ist insgesamt relativ großbauend und großvolumig und für den Einsatz in Kraftfahrzeugen insbesondere auch aus optischen Gründen wenig praktikabel. Eine ähnliche Heißgetränkezubereitungseinrichtung ist auch aus der DE 10 2004 016 194 A1 bekannt.

Aus der WO 00/71006 A1 ist weiter ein Heißwasseraufbereiter bekannt, der für den Einbau in einem Kraftfahrzeug an eine 12- bzw. 24-Volt-Gleichstromquelle des Fahrzeugs angeschlossen werden kann. Hierfür ist ein Niedervoltboiler vorgesehen, in welchem mit einem bzw. zwei 12-Voltelementen ca. 3,5 dl Wasser aufgeheizt werden können. Diese Menge an Heißwasser soll genügen, um eine bis zwei Portionen Heißwasser innerhalb kürzeste Zeit in ein Gefäß abgeben zu können. Die Steuerung der Wassermenge erfolgt über eine Pumpe und ein Ventil. Als Frischwasservorratsbehälter dient eine handelsübliche PET-Flasche, auf deren genormter Ausgussöffnung ein Anschlussventil aufgeschraubt ist. Als Vorratsbehälter für ein Kaffeegranulat dient eine handelsübliche Kaffeepulverdose. Der Aromaverschluss der Dose wird während dem Aufstecken der Dose auf den Anschlussstutzen durch den in diesem Stutzen angeordneten Öffner durchbrochen. Ein Becher bzw. eine Tasse, in welches das Kaffeegranulat und/oder das heiße Wasser gefüllt wird, ist durch einen Bügel unter einem Wasserhahn festgehalten, so dass hier das heiße Wasser von oben her in die Tasse bzw. in den Becher eintropft.

Ein ähnliches Prinzip mit einem Wasserhahn, bei dem die Flüssigkeit von oben her in einen darunter abgestellten oder gehalterten Behälter eintropft, zeigen auch die EP 0 156 719 A1, die GB 1,417,467 B und die US 4,057,892 B.

Weiter ist aus der DE 102 34 025 A1 eine Einrichtung zum Aufbereiten von heißen Getränken für ein Kraftfahrzeug bekannt, bei dem in einem mobilen Container eine Espresso-Maschine untergebracht ist, die durch eine Öffnung auf der Oberseite des Containers bedienbar ist. Der Container weist die Form eines Quaders auf und ist aus einem stabilen Kunststoff hergestellt, wobei an der Bodenseite Fixiereinrichtungen angeordnet sind, die zum Festhalten des Containers im Fahrzeuginnenraum dienen, wobei der Container in verschiedene Positionen entlang einer am Fahrzeugboden angeordneten Schiene verschoben werden kann. Durch eine Öffnung auf der Oberseite des Containers kann die Espresso-Maschine formschlüssig in den Container eingesetzt werden. Ein ähnlicher Aufbau in Verbindung mit einem Heißwasserbereiter ist auch aus der DE 198 16 031 A1 bekannt.

Weiter ist aus der GB 2 066 433 A ein kochendes Wasser bereitender Wasserbereiter bekannt, der eine Mischbatterie mit Schwenkauslaufrohr, ein Überlaufrohr, eine Wasserstandsanzeige, eine Reinigungsöffnung, ein Tauchrohr sowie eine Anschlussleitung aufweist. In dem an ein Wasserleitungsnetz angeschlossenen Wasserbereiter wird die eingefüllte Wassermenge zum Kochen gebracht. Bei separater Anwendung des Wasserbereiters, bei der dieser nur zur Wassererwärmung dient, wird das heiße Wasser über das Überlaufrohr abgezogen. Durch die Mischbatterie mit Schwenkauslaufrohr erfolgt die Entnahme des erwärmten Wassers. Bei Benutzung einer Filtereinrichtung ist das Tauchrohr geöffnet und das Überlaufrohr geschlossen. Dadurch besteht die Möglichkeit, dass der im Wasserbereiter vorhandene Wasserdampf das Wasser durch das Tauchrohr und den Überströmkanal zur Filtereinrichtung fördert. In dieser Filtereinrichtung befindet sich ein Filter und ein Getränkeaufnahmegefäß, das auf einer Warmhalteplatte angeordnet ist. Die Filtereinrichtung weist zudem neben einer Füllstandsanzeige einen Auslasshahn sowie eine elektrische Steckdose auf.

Vorrichtungen zur Heißwassererzeugung bzw. Kaffeemaschinen sind ferner auch aus der WO 01/72187 A1, der GB 2394215 A und der FR 2 506 592 A bekannt.

Demgegenüber ist es Aufgabe der vorliegenden Erfindung, eine alternative Anordnung einer Vorrichtung zur Heißwasser- oder Dampferzeugung zur Verfügung zu stellen, mittels der Heißwasser oder Dampf auf technisch einfache sowie auf optisch ansprechende Weise für eine Vielzahl von Anwendungsfällen zur Verfügung gestellt werden kann.

Diese Aufgabe wird gelöst mit den Merkmalen des Anspruchs 1. Vorteilhafte Weiterbildungen hierzu sind Gegenstand der Unteransprüche.

Gemäß Anspruch 1 ist eine Anordnung einer Vorrichtung zur Heißwasser- oder Dampferzeugung in einem einen Wandbereich aufweisenden Fahrzeug oder Gebäudeinnenraum vorgesehen, bei der die Vorrichtung wenigstens einen Wasserspeicher sowie wenigstens eine Heizeinrichtung aufweist, mittels der Wasser auf eine vorgegebene Temperatur erwärmt werden kann. Die Vorrichtung weist ferner wenigstens eine Zapfstelle für ein insbesondere chargenweises Abzapfen von Wasser und/oder Dampf auf, die, insbesondere gegebenenfalls auch zur Zapfstellenbetätigung und/oder zur Freigabe einer vorgegebenen Wasser- oder Dampfmenge, mit einem Zapfstellen-Anschlusselement koppelbar oder verbindbar ist. Erfindungsgemäß ist weiter vorgesehen, dass die wenigstens eine Zapfstelle in der Art einer Anschlusskupplung oder in der Art einer Dampf- oder Wassersteckdose in einem Wandbereich des Fahrzeuges oder Gebäudeinnenraums mündet und durch eine Art Ventilelement gebildet ist oder ein solches umfasst, wobei das Ventilelement bei einer Ventilbetätigung Wasser oder Dampf in der gewünschten Menge, insbesondere auch chargenweise freigibt. Unter einem Ventilelement wird hierbei in allgemeinster Weise eine mechanisch, elektronisch oder von Hand betätigbare bzw. gesteuerte und absperrbare Einlass-, Auslass- oder Durchtrittsvorrichtung für Dampf oder Wasser verstanden. Ein derartiges mechanisch und/oder elektronisch betätigbares Ventilelement ist einfach und preiswert in der Herstellung und zudem funktionssicher in der Bedienung. Das bevorzugt im Wesentlichen die Zapfstelle ausbildende Ventilelement weist zudem vorteilhaft einen in einer Ventilruhestellung mittels eines Absperrelementes absperrbaren und bei einer Ventilbetätigung mittels des Absperrelementes freigebbaren Ventilelement-Strömungskanal auf, der bevorzugt selbst oder mit einem weiterführenden Anschlusskanal zur Heizeinrichtung geführt und mit dieser mittelbar oder unmittelbar strömungsverbunden ist. Zum Beispiel mündet die wenigstens eine Zapfstelle an einem fahrzeugseitigen Wandbereich, bevorzugt an einem fahrzeugseitigen Innenraumwandbereich. Hierdurch ist neben einer einfachen Zugänglichkeit auch eine wenig störende und optisch ansprechende Möglichkeit für die konkrete Ausgestaltung einer derartigen erfindungsgemäßen Zapfstelle geschaffen. Eine besonders bevorzugte Weiterbildung hierzu sieht vor, dass die Zapfstelle in der Art einer Dampf- oder Wassersteckdose insbesondere im Wesentlichen oberflächenbündig in einem fahrzeugseitigen Wandbereich, bevorzugt in einem fahrzeugseitigen Innenraumwandbereich mündet.

Eine derartige Zapfstelle kann an verschiedensten Stellen eines z. B. Fahrzeugs, insbesondere eines Fahrzeuginnenraums angeordnet werden, z. B. in Stauräumen, wie dem Kofferraum. Bevorzugt ist jedoch eine Anordnung einer derartigen Zapfstelle in einem Fahrgastraum als Innenraumbereich eines Fahrzeuges, insbesondere eines Kraftfahrzeuges. Ein besonderer Vorteil einer derartigen Zapfstelle ist die Möglichkeit, jederzeit für unterschiedlichste Anwendungsfälle eine geeignete Menge an Heißwasser oder Dampf zur Verfügung zu stellen. Das heißt, dass eine separate Wasser-Zapfstelle im Fahrzeug zur Verfügung gestellt wird, die unabhängig von einer z. B. Kaffee- oder Espressomaschine bedient werden kann und somit auch für andere Einsatz- bzw. Anwendungsfälle zur Verfügung steht, was die Funktionalität der Vorrichtung wesentlich erhöht. Unabhängig von der bevorzugten Verwendung in Fahrzeugen kann die erfindungsgemäße Vorrichtung aber auch universeller eingesetzt bzw. verwendet werden, so z. B. als Wasserzapfstelle, vorzugsweise als Heißwasser- oder Dampfzapfstelle in Büros, Küchen oder dergleichen. Ein besonderer Vorteil einer derartigen Verwendung besteht z. B. in Verbindung mit einem z. B. als Kaffeebecher ausgebildeten Zapfstellen-Anschlusselement, was nachfolgend noch näher erläutert wird. Nachfolgend wird die Erfindung im Wesentlichen in Verbindung mit einer besonders bevorzugten Verwendung in Fahrzeugen beschrieben und erläutert, was jedoch nur beispielhaft zu verstehen ist. Sofern eine bestimmte Verwendung auch unabhängig vom Fahrzeug, z. B. im Büro- oder Officebereich, möglich ist, soll dies ausdrücklich vom Schutzumfang mitumfasst sein.

Es versteht sich; dass mittels einer derartigen erfindungsgemäßen Vorrichtung selbstverständlich nicht nur Heißwasser oder heißer Wasserdampf (Dampf) erzeugt werden kann, sondern dass darüber hinaus, z. B. durch entsprechende Abschaltung der Heizeinrichtung bzw. eines Heizmoduls auch nicht erwärmtes Wasser zur Verfügung gestellt werden kann. An dieser Stelle sei ausdrücklich erwähnt, dass für den Fall, dass keine Heißwasser- oder Dampferzeugung gewünscht sein sollte, die Heizeinrichtung der erfindungsgemäßen Vorrichtung entbehrlich ist, so dass neben einem Wasserspeicher und gegebenenfalls einer Förderpumpe lediglich die wenigstens eine erfindungsgemäße Zapfstelle fahrzeugseitig vorzusehen ist. Dies soll ausdrücklich mit vom Schutzumfang umfasst sein, wenngleich die Kombination mit einer Heizeinrichtung, um gleichzeitig auch eine Dampf- oder Heißwasserbereitstellung mit anzubieten bevorzugt ist. Unter heißem Wasser wird dabei im Falle der vorliegenden Erfindung jegliches auf eine höhere Temperatur als Umgebungstemperatur erwärmtes Wasser verstanden. Anstelle von Wasser können zudem selbstverständlich auch andere Flüssigkeiten eingesetzt werden. Der Begriff Wasser ist somit hier als Synonym für sämtliche zum Einsatz in Verbindung mit der erfindungsgemäßen Vorrichtung geeigneten Flüssigkeiten oder fluide Medien zu verstehen.

Weiter kann die Zapfstelle gemäß einer bevorzugten Ausgestaltung in einer Bestandteil des Wandbereichs bildenden oder mit dem Wandbereich verbindbaren Blende oder Konsole münden. Eine derartige Blende oder Konsole kann, insbesondere in Verbindung mit einer Modulbauweise neben einer geeigneten Halterungs- und/oder Anordnungsmöglichkeit einer Zapfstelle im Fahrzeug optisch auch so gestaltet werden, dass diese sich z. B. in ein wiederkehrendes Designelement eines Fahrzeuges harmonisch einfügt und gleichzeitig den speziellen Anforderungen für die Lagerung einer Zapfstelle genügt. Gleiches gilt für z. B. andere Anwendungen, wie z. B. im Küchen- oder Bürobereich, z. B. in Verbindung mit Arbeitsplatten oder dergleichen.

Wie bereits zuvor geschildert, kann die erfindungsgemäße Zapfstelle an unterschiedlichen Positionen eines bevorzugt Fahrzeugs angeordnet sein. Besonders bevorzugt ist jedoch der Wandbereich Bestandteil einer Innenausstattung und/oder Innenverkleidung eines Fahrgastraumes eines Fahrzeugs. Der Begriff Innenausstattung und Innenverkleidung ist hierbei im umfassenden Sinne zu verstehen und umfasst z. B. auch Bauteile wie die Mittelkonsole, Seitenverkleidungen oder dergleichen.

Gemäß einer besonders bevorzugten konkreten Ausgestaltung ist zudem vorgesehen, dass die wenigstens eine Zapfstelle im Bereich zwischen zwei benachbarten Sitzpositionen des Fahrgastraumes angeordnet ist. Dadurch ist eine besonders einfache Zugänglichkeit der Zapfstelle gewährleistet. Besonders vorteilhaft ist es, wenn die wenigstens eine Zapfstelle Bestandteil einer zwischen Fond- und/oder Frontinsassenposition angeordneten oder anordenbaren und einen Innenraumwandbereich bildenden Mittelkonsole ist. In einer derartigen Mittelkonsole können die Bauteile der erfindungsgemäßen Vorrichtung auf besonders einfache Weise zuverlässig und gut zugänglich verstaut angeordnet werden, ohne dass diese im Innenraum als störend empfunden werden bzw. in unüblicher Weise im Fahrgastraum angeordnet werden müssen. Dies ist insbesondere dann der Fall, wenn die wenigstens eine Zapfstelle in einem Bereich oder anstelle der dort üblicherweise angeordneten Cupholder vorgesehen wird.

Für den Fall, dass das Fahrzeug mehrere Zapfstellen aufweist, kann vorgesehen sein, dass diese Zapfstellen jeweils unabhängig voneinander bedienbare Einheiten darstellen. Für den Fall jedoch, dass wenigstens ein Teil dieser mehreren Zapfstellen von demselben Wasserspeicher bzw. von derselben Heizeinrichtung gespeist wird, ist bevorzugt eine Steuereinrichtung vorgesehen, mittels der im Falle der Betätigung einer der Zapfstellen die anderen oder wenigstens ein Teil der anderen Zapfstellen gesperrt oder deaktiviert sind. Dadurch lässt sich eine Fehlbedienung zuverlässig ausschließen. Beispielsweise kann vorgesehen sein, dass wenigstens eine Zapfstelle im Fondbereich und wenigstens eine Zapfstelle im Frontbereich eines Fahrgastraumes vorgesehen sind, die über einen gemeinsamen Wasserspeicher und eine gemeinsame Heizeinrichtung gespeist werden.

Gemäß einer weiteren besonders bevorzugten konkreten Ausgestaltung bildet das Ventilelement bzw. die Zapfstelle in einer vorteilhaften Doppelfunktion gleichzeitig eine Art Anschlusskupplung oder Steckdose aus, mittels der eine mit einem Anschlussgegenelement ausgebildete Anschlusseinrichtung als Zapfstellen-Anschlusselement lösbar mit dem Ventilelement bzw. der Zapfstelle verbunden werden kann. Die Zapfstelle soll hierbei, z. B. fahrzeugseitig, so zugänglich sein, dass diese entweder von vorneherein frei zugänglich in einem Fahrzeug-Innenraum bzw. einem entsprechenden Wandbereich angeordnet ist oder dass diese nach dem Entfernen einer Schutzabdeckung oder dergleichen frei zugänglich ist. Mit der gleichzeitigen Integration einer derartigen Anschlusskupplungsfunktion in das Ventilelement bzw. die Zapfstelle wird die Bauteilvielfalt reduziert und gleichzeitig eine funktionssichere und einfach zu bedienende Anschlussmöglichkeit bzw. Abzapfmöglichkeit von Wasser zur Verfügung gestellt. Dies begünstigt den Wunsch, Wasser im Fahrzeug möglichst tropffrei abzapfen zu können, um keine unerwünschte Verunreinigung im Fahrzeug zu erhalten.

Gemäß einer besonders bevorzugten konkreten Ausgestaltung ist vorgesehen, die lösbare Verbindung als Formschluss- und/oder Kraftschlussverbindung, insbesondere in der Form einer Hintergriff- oder Bajonettverschluss-Verbindung auszubilden. Eine derartige mechanische Verbindung zeichnet sich durch eine hohe Funktionssicherheit aus und gewährleistet insbesondere für den Fall, dass z. B. Heißwasser für eine Espressobereitung mit einem hohen Druck von bis zu 19 bar zur Verfügung gestellt wird, kein unerwünschtes Abheben des dann als Trinkbecher ausgebildeten Zapfstellen-Anschlusselementes erfolgen kann.

Zur Zapfstellen- bzw. Ventilbetätigung selbst gibt es grundsätzlich mehrere Möglichkeiten. So kann z. B. das Zapfstellen-Anschlusselement eine mechanische Steuerungseinrichtung aufweisen, die insbesondere durch ein mechanisches Betätigungselement am Zapfstellen-Anschlusselement, insbesondere am Anschlussgegenelement, gebildet ist. Mittels einer derartigen mechanischen Steuerungseinrichtung kann das Absperrelement des Ventilelementes bei einer Verbindung von Ventilelement und Zapfstellen-Anschlusselement zuverlässig und im Wesentlichen selbsttätig beim Ankoppeln an die Zapfstelle in die den Ventilelement-Strömungskanal freigebende Freigabeposition verlagert und dort gehalten werden. Sofern die Wasser- und/oder Dampfabgabe nicht bereits bei diesem Ankoppeln freigegeben werden soll, kann gemäß einer bevorzugten Ausführungsform vorgesehen sein, dass über zusätzliche Bedienelemente, wie z. B. Schalter, Taster, Betätigungsknöpfe oder dergleichen, vom Bediener der Wasser- oder Dampfstrom funktionssicher und kontrolliert endgültig freigegeben wird. Diese Freigabe soll bevorzugt nur dann möglich sein, wenn das Zapfstellen-Anschlusselement richtig angekoppelt ist. Die Bedienelemente können z. B. über ein Display oder einen Bildschirm, z. B. in Verbindung mit einer z. B. fahrzeugseitigen Menüführung, angewählt werden. Ebenso ist aber auch eine Anordnung einer vorgegebenen Anzahl von Bedienelementen im Bereich der Zapfstelle möglich, z. B. an einer die Zapfstelle ausbildenden Sichtblende, Konsole oder dergleichen. Die endgültige Freigabe des Dampf- und/oder Wasserstroms zur Zapfstelle hin erfolgt hier somit durch Betätigung einer zusätzlichen der eigentlichen Zapfstelle vorgelagerten Absperreinrichtung, die auf beliebige Art ausgebildet sein kann.

Alternativ oder aber gegebenenfalls auch zusätzlich dazu kann das Ventilelement auch mit einer elektronischen Steuereinrichtung gekoppelt sein, mittels der das Absperrelement für eine vorgegebene Zeitdauer mittelbar, z. B. über eine mittels der Steuereinrichtung aktivierbare und mit dem Absperrelement zusammenwirkende Betätigungseinrichtung, oder unmittelbar in die Freigabeposition verlagerbar ist. Bevorzugt weist die Steuereinrichtung analog zu der vorher beschriebenen Ausgestaltung hierzu wenigstens ein, z. B. fahrzeugseitig, zugängliches Bedienelement, z. B. einen Druckknopf oder einen Schalter oder dergleichen, auf, mittels dem die Steuereinrichtung manuell betätigt werden kann.

Insgesamt gesehen gibt es somit in Verbindung mit sowohl der mechanischen als auch der elektronischen Steuereinrichtung mehrere Möglichkeiten, mit ggf. zusätzlichen Bedienelementen, die Abzuzapfen gewünschte Wasser- oder Dampfmenge freizugeben, festzulegen oder auszuwählen. In einer einfachen Ausführungsform kann z. B. lediglich ein Ein- oder Ausschalten erfolgen, so dass eine Wasser- oder Dampfabgabe nur solange erfolgt, wie die Vorrichtung z. B. über einen Schalter oder dergleichen eingeschaltet ist. Auch eine Zeitsteuerung kann vorgesehen sein, z. B. dergestalt, dass bei einer Betätigung des Bedienelementes die Dampf- und/oder Wasserzufuhr für eine vorgegebene Zeit freigegeben wird und nach Ablauf der vorgegebenen Zeit wieder gesperrt wird. Dieses Sperren kann in Verbindung mit einer elektronischen Steuereinrichtung, mittels der das Absperrorgan verlagert wird, so erfolgen, dass das Absperrorgan wieder in seine Schließstellung zurückverlagert wird. In Verbindung mit einer mechanischen Steuereinrichtung zur für die Dauer der Ankupplung an die Zapfstelle im Wesentlichen dauerhaften Verlagerung des Absperrorgans kann das Sperren z. B. dadurch erfolgen, dass an anderer Stelle die Wasser- und/oder Dampfzufuhr mittels eines zusätzlichen Absperrelementes wieder unterbrochen wird. Beispielsweise können in Verbindung mit einer Heißwasserbereitstellung für eine Kaffeebereitung auch unterschiedliche Taster vorgesehen sein, denen jeweils unterschiedliche Mengen an freizugebendem Wasser zugeordnet sind, z. B. für unterschiedliche Kaffee-Arten oder Dampf- bzw. Wassermengen. Als zusätzliche Sicherungsfunktion kann in Verbindung mit einer derartigen Ausführungsform auch vorgesehen sein, dass die Bedienelemente bzw. die elektronische Steuereinrichtung nur bei mit dem Ventilelement verbundenem Zapfstellen-Anschlusselement betätigt werden können.

Ein besonders bevorzugtes Zapfstellen-Anschlusselement, insbesondere ein Anschlussgegenelement eines Zapfstellen-Anschlusselementes, das Bestandteil eines z. B. als Aufnahmegefäß ausbildbaren Zapfstellen-Anschlusselementes sein kann oder aber auch als separates Bauteil ausgebildet und mit dem Zapfstellen-Anschlusselement verbunden sein kann, sieht ein anschlusselementseitiges Absperrmittel vor, das einen Einströmkanal des Zapfstellen-Anschlusselementes bzw. des Anschlussgegenelementes in einer Grundstellung verschließt und das bei einer Verbindung von Zapfstellen-Anschlusselement oder Anschlussgegenelement mit dem Ventilelement bzw. der Zapfstelle einen anschlusselementseitigen Einströmkanal so freigibt, dass der anschlusselementseitige Einströmkanal und ein zapfstellenseitiger Strömungskanal, insbesondere der Ventilelement-Strömungskanal strömungsverbunden sind. Eine derartige Strömungsverbindung und Ausgestaltung von Anschlussgegenelement und/oder Zapfstellen-Anschlusselement ist wenig störanfällig und weist damit bei gleichzeitig relativ einfacher Herstellungsweise eine hohe Funktionssicherheit auf.

Besonders bevorzugt ist das anschlusselementseitige Absperrmittel durch ein in Richtung Grundstellung vorgespanntes, insbesondere federvorgespanntes Absperrorgan ausgebildet, das bei der Verbindung von Zapfstellen-Anschlusselement und Zapfstelle bzw. Ventilelement mittels eines zapfstellen- bzw. ventilelementseitigen Anschlussstutzens in die Freigabestellung verlagert und dort gehalten werden kann. Der zapfstellen- bzw. ventilelementseitige Anschlussstutzen ist dabei bevorzugt in etwa mittig und zentral im anschlussseitigen Ende der bevorzugt als Ventilelement angeordnet, so dass der Ventilelement-Strömungskanal im Bereich des ventilelementseitigen Anschlussstutzens münden kann. Dadurch ergibt sich insbesondere ein zweckmäßiger und kompakter sowie herstellungstechnisch einfacher Aufbau der Anschlussverbindung.

Gemäß einer weiteren besonders bevorzugten Ausgestaltung der vorliegenden Erfindung ist die wenigstens eine Zapfstelle Bestandteil eines Heißwasserbereitungsmoduls. Dieses Heißwasserbereitungsmodul weist besonders bevorzugt eine Sichtblende als an einem fahrzeugseitigen Randbereich anordenbares oder Bestandteil eines solchen Wandbereiches bildendes Wandelement auf, und zwar bevorzugt in Form einer Konsole oder als Konsolenbestandteil. In einer derartigen Sichtblende kann eine vorgegebene Anzahl von Zapfstellen münden, die für eine Bedienung ggf. nach Entfernen oder Abheben eines entsprechenden Zapfstellen-Abdeckelementes zugänglich sein kann. Das Vorsehen einer derartigen Abdeckung ist lediglich optional. Eine derartige Sichtblende kann auf optisch ansprechende Weise gestaltet werden, zum einen so, dass die Zapfstelle einfachst aufgefunden werden kann und zum anderen auch so, dass sich die Sichtblende als wiederkehrendes Designelement an ein vorhandenes Design, z. B. in einem Fahrzeuginnenraum, anpasst.

Insbesondere in Verbindung mit einer Anwendung der erfindungsgemäßen Vorrichtung in einem Fahrzeug, insbesondere in einem Kraftfahrzeug, kann die Sichtblende z. B. die Sichtseite eines fahrzeugseitig verbaubaren Modul-Aufnahmegehäuses ausbilden. Ein derartiges Modul-Aufnahmegehäuse kann dann wiederum insbesondere in einem fahrzeugseitig ausgebildeten Stauraum, bevorzugt einer Mittelkonsole, aufgenommen werden. Das Modul-Aufnahmegehäuse kann dabei unterschiedlich ausgebildet sein, und zwar z. B. dergestalt, dass dieses lediglich z. B. das Ventilelement einer Zapfstelle aufnimmt. Andererseits kann das Modul-Aufnahmegehäuse aber ggf. auch größer ausgebildet sein, so dass in diesem auch noch weitere Elemente des Heißwasserbereitungsmoduls aufgenommen sein können.

Um Wasser zur Verfügung zu stellen, ist bevorzugt vorgesehen, dass der Zapfstelle des Heißwasserbereitungsmoduls ein einen Wasserspeicher ausbildenden Wasserbehälter zugeordnet ist, der zudem bevorzugt mit einem Behälterdeckel lösbar verschließbar ist. Dieser Wasserbehälter mündet gemäß einer besonders bevorzugten konkreten Ausgestaltung mit seiner Behälteröffnung ebenfalls in der Sichtblende des Heißwasserbereitungsmoduls. Ein derartiger Wasserbehälter kann dann bevorzugt ebenfalls im Modul-Aufnahmegehäuse aufgenommen sein und dort mit einem Wasserbehälter-Anschlussstutzen strömungsverbunden sein, mittels dem dann Wasser aus dem Wasserbehälter zur Heizeinrichtung abgezogen werden kann, wie dies nachfolgend noch näher erläutert wird.

Gemäß einer besonders bevorzugten Doppelfunktion kann der Behälterdeckel an seiner Sichtseite zudem mit einer Cupholder-Funktion versehen sein, so dass z. B. in Verbindung mit einer Anordnung im Mittelkonsolenbereich eines Kraftfahrzeugs eine im Wesentlichen übliche Innenraumgestaltung vorgefunden und ausgebildet werden kann, nämlich zum einen ein Cupholder, der in seiner weiteren zusätzlichen Funktion gleichzeitig den Behälterdeckel für einen Wasserspeicher bildet, und neben diesem die Heißwasserzapfstelle, um z. B. Heißwasser für eine Kaffeebereitung zu zapfen. Eine derartige Ausgestaltung erlaubt somit ohne wesentliche designtechnische Veränderungen des z. B. Fahrzeuginnenraums eine Integration einer Dampf- bzw. Wasserzapfstelle im Fahrzeug, so dass dadurch eine hohe Kundenakzeptanz erzielt werden kann.

In der Sichtblende des Heißwasserbereitungsmoduls kann ferner sehr gut und übersichtlich wenigstens ein mit einer elektronischen Steuereinrichtung zur Betätigung des Heißwasserbereitungsmoduls gekoppeltes Bedien- oder Betätigungselement angeordnet werden, wobei die Komponenten der elektronischen Steuereinrichtung ebenfalls im Modul-Aufnahmegehäuse aufgenommen sein können. Mit einer derartigen Anordnung der Bedien- oder Betätigungselemente, die z. B. durch Schalter, Taster oder dergleichen gebildet sein können, ist eine einfache und funktionssichere Bedienung der Zapfstelle, z. B. in Verbindung mit einer Kaffeebereitung oder einer Hot-Towel-Funktion, wie diese nachfolgend noch näher erläutert werden, möglich.

Ferner umfasst das Heißwasserbereitungsmodul bevorzugt eine Heizeinrichtung, die über Verbindungsleitungen oder Verbindungskanäle mit dem wenigstens einen Wasserspeicher einerseits und mit der wenigstens einen Zapfstelle andererseits strömungstechnisch verbunden ist. Dadurch kann das Wasser aus dem Wasserspeicher in die Heizeinrichtung strömen, wo es ggf., falls dies gewünscht wird, auf eine vorgegebene Temperatur aufgeheizt wird und als Wasser oder Dampf zur Zapfstelle strömt oder gepumpt wird. Um das Wasser oder den Dampf pumpen zu können, umfasst die Heizeinrichtung gemäß einer besonders bevorzugten konkreten Ausgestaltung eine Fördereinrichtung, bevorzugt eine elektrische Pumpe und einen elektrisch beheizbaren Thermoblock, mittels denen das aus dem Wasserspeicher angesaugte Wasser auf eine vorgegebene Temperatur aufgeheizt und mit einem vorgegebenen Druck an der Zapfstelle zur Verfügung gestellt werden kann. Der Thermoblock wird insbesondere in Verbindung mit der Verwendung in einem Fahrzeug bevorzugt mit einer Niederspannung von 12 Volt und zusätzlich oder alternativ mit einer Heizleistung von in etwa 150 bis 250 Watt betrieben. Eine Heizleistung von in etwa 180 Watt hat sich in der Praxis als ausreichende Heizleistung erwiesen.

Die Heizeinrichtung selbst kann bevorzugt in einer Montagebox als Aufnahmegehäuse aufgenommen und festgelegt sein, wobei die Leitungen, insbesondere die Schlauchleitungen über eine entsprechende Boxenöffnung heraus sowie anschließend ggf. wieder durch eine Gehäuseöffnung eines Aufnahmegehäuses für die Zapfstellen- und/oder Wasserspeicherbauteile hindurch, zu der Zapfstelle und dem Wasserspeicher geführt werden. Die elektronischen Bauteile der Heizeinrichtung können dabei in einer separaten, mit der Montagebox verbindbaren, insbesondere mittels einer Schraubverbindung verbindbaren, Zusatzbox aufgenommen sein. Die elektrische Verbindung zwischen den elektronischen Bauteilen und den Bauteilen der Heizeinrichtung erfolgt dabei ggf. ebenfalls über durch eine Boxenwand hindurchgeführte Leitungen.

Die Montagebox selbst weist bevorzugt einen abnehmbaren Deckel auf, der mit der Montagebox lösbar verbunden ist, um eine einfache Zugänglichkeit zum Montageboxinnenraum zu ermöglichen. Gemäß einer besonders bevorzugten Ausgestaltung hierzu ist der abnehmbare Deckel der Montagebox durch eine Armlehne, insbesondere durch eine Mittelarmlehne gebildet, die zwischen zwei benachbarten Sitzpositionen, z. B. in Verbindung mit einer Mittelkonsole angeordnet ist. Auch hier kann somit die Armlehne, insbesondere eine Mittelarmlehne wiederum in einer besonders bevorzugten Doppelfunktion gleichzeitig in ihrer angestammten Funktion als Armlehne und darüber hinaus zusätzlich auch noch als abnehmbarer Deckel der Montagebox fungieren, wodurch sich eine hohe Funktionsintegration und damit Reduzierung der Bauteilvielfalt ergibt. Zudem trägt dies dazu bei, die Zapfstelle in Verbindung mit dem Heißwasserbereitungsmodul in optisch ansehnlicher Weise in ein hochwertiges Fahrzeuginnenraumdesign zu integrieren.

Gemäß einer konkreten Ausgestaltung der vorliegenden Erfindung ist die wenigstens eine Zapfstelle, insbesondere eine Zapfstelle in Verbindung mit einem Wasserbehälter eines Heißwasserbereitungsmoduls, wie dieser bereits zuvor beschrieben worden ist, im Bereich einer Mittelkonsole eines Fahrgastraumes angeordnet, und zwar im Wesentlichen unmittelbar vor einer Mittelarmlehne zwischen zwei Insassensitzpositionen eines Front- und/oder Fondbereichs. In einem derartigen Mittelkonsolenbereich befinden sich bei gegenwärtigen Fahrzeuginnenraumdesigngestaltungen regelmäßig Cupholder-Funktionen, die dann gemäß dieser erfindungsgemäßen Ausführungsform durch die Zapfstelle wenigstens zum Teil ersetzt werden, so dass sich keine wesentliche optische Änderung eines Fahrzeuginnenraumdesigns ergibt, insbesondere in Verbindung mit einer relativ ähnlichen optischen Gestaltung einer Zapfstelle als z. B. runde Wassersteckdose, wobei z. B. in Verbindung mit einem Wasserspeicher-Behälterdeckel, der an seiner Sichtseite mit einer Cupholder-Funktion ausgestattet ist, sogar noch eine Erhöhung der Funktionalität verbunden ist. Denn durch die Bereitstellung einer Zapfstelle, insbesondere einer Heißwasserzapfstelle im Fahrzeug, insbesondere im eben beschriebenen Mittelkonsolenbereich eines Fahrgastraums, lässt sich z. B. eine Kaffeebereitung mit einem als Kaffeebecher ausgebildeten Zapfstellen-Anschlusselement oder aber auch eine Hot-Towel-Funktion in Verbindung mit einem als Hot-Towel-Aufnahmebehältnis ausgebildeten Zapfstellen-Anschlusselement zur Verfügung stellen, wie dies nachfolgend näher erläutert wird:

Bevorzugt ist das Trinkgefäß mit einem von eine Trinkgefäßwand umgebenen und über eine Trinköffnung zugänglichen Gefäßinnenraum versehen, in dem z. B. Flüssigkeiten, insbesondere mittels einer Zuführ- und Dosiereinrichtung erzeugte heiße Flüssigkeiten und insbesondere ein in einem Extraktionskopf gewonnenes Extrakt, vorzugsweise ein in einem Extraktionskopf einer Kaffeemaschine gewonnenes Kaffeeextrakt, aufgenommen werden kann. Dabei ist vorgesehen, dass das Trinkgefäß zusätzlich zur Trinköffnung eine gefäßwandseitige Einströmöffnung, insbesondere für ein Kaffeeextrakt, aufweist. Mit anderen Worten kann hier somit eine z. B. Flüssigkeit, insbesondere ein Kaffeeextrakt, im Wesentlichen von unten bzw. gegebenenfalls auch von der Seite her in den Gefäßinnenraum einströmen.

Grundsätzlich sind hier mehrere Arten einer Strömungsverbindung zwischen dem die Einströmöffnung aufweisenden Trinkgefäß und einer heiße Flüssigkeit, insbesondere heißes Wasser oder Dampf, liefernden Zapfstelle bzw. dem das z. B. Kaffeeextrakt liefernden Extraktionskopf denkbar, so z. B. eine mittelbare Verbindung zwischen dem Trinkgefäß und der Zuführ- und Dosiereinrichtung bzw. dem Extraktionskopf mittels einer Schlauch- oder Rohrverbindung oder dergleichen.

Besonders vorteilhaft ist jedoch gemäß einer bevorzugten Ausgestaltung der Erfindung eine unmittelbare Verbindung zwischen einem Brüh- oder Extraktionskopf und dem Trinkgefäß. Gemäß dieser Ausführungsform ist das Trinkgefäß mit einem Extraktionskopf zum Einsetzen bzw. Einfüllen einer Füllstoffcharge, insbesondere einer Kaffeecharge, lösbar verbunden und bilden beide Bauteile gemeinsam einen z. B. nach dem Brüh- bzw. Extraktionsvorgang handhabbaren Trinkbecher, insbesondere einen Kaffeebecher, der von einer Zapfstelle, insbesondere einer fahrzeugseitigen Zapfstelle abkoppelbar ist. Diese Wasserzuführeinrichtung kann neben heißem Wasser auch Dampf zur Verfügung stellen, z. B. für eine Milchaufschäumung, sofern das Wasser auf eine entsprechende Temperatur aufgeheizt wird. Nachfolgend wird dies zur Vermeidung von Wiederholungen nicht mehr explizit erwähnt, soll jedoch als zusätzliche Funktion stets mitumfasst sein.

Die handhabbare Baueinheit aus Trinkgefäß und Brüheinheit bzw. Extraktionskopf ist vorzugsweise mittels einer Schnellverschlussvorrichtung von der Zapfstelle abkoppelbar, wobei die lösbare Verbindung zwischen dem Trinkgefäß und dem Extraktionskopf selbst so gestaltet ist, dass diese beim Lösen der durch diese beiden Bauteile gebildeten Baueinheiten von der Zapfstelle nicht getrennt wird. Hierzu kann beispielsweise vorgesehen sein, dass beim z. B. Lösen der Schnellverschlussverbindung, die z. B. durch einen Bajonett-Verschluss gebildet sein kann, ein Drehen in eine Richtung erfolgt, die die Verbindung zwischen dem Trinkgefäß und der Brüheinheit bzw. dem Extraktionskopf unterstützt. Dies ist beispielsweise der Fall, wenn das Trinkgefäß mit dem Extraktionskopf mittels einer Schraubverbindung verbunden ist, bei der die beiden Bauteile ineinander bzw. miteinander verschraubt werden. Anstelle eines Bajonett-Verschlusses kann aber auch jede andere Schnellverschlussverbindung vorgesehen werden, so z. B. eine Verbindung mittels wenigstens eines extraktionskopfseitig in Richtung Extraktionskopfaufnahme abragenden Rast- und/oder Verriegelungselementes, das z. B. durch eine Rastnase oder einen Verriegelungshaken gebildet ist, das mit wenigstens einem vorzugsweise federbeaufschlagten Gegenelement lösbar verrastet und/oder verriegelt werden kann, wenn der Extraktionskopf in die Extraktionskopfaufnahme eingesteckt wird. Zur Entriegelung kann eine separate Betätigungseinrichtung vorgesehen sein. Alternativ kann aber auch ein Überdrücken der Feder vorgesehen sein.

Grundsätzlich und hauptsächlich ist ein derartiges Trinkgefäß-System für die Kaffeebereitung geeignet. Alternativ oder zusätzlich kann jedoch mit einem derartigen System auch eine andere Anwendung vorgesehen sein, z. B. eine Teebereitung oder auch lediglich eine Heißwasserbereitung, in dem das durch eine Zapfstelle bereitgestellte heiße Wasser kein Kaffeepulver, sondern z. B. Tee oder dergleichen extrahiert. Werden keine zu extrahierenden Stoffe z. B. in einen Extraktionskopf eingesetzt, erhält man im Trinkgefäß lediglich Heißwasser, das dann in einer gewünschten Weise verwendet werden kann, z. B. auch dergestalt, dass in dieses Heißwasser ein Teebeutel eingehängt werden kann bzw. ein Pulver, z. B. ein Milchpulver oder Teegranulat oder Kaffeegranulat, aufgelöst werden kann. Soll lediglich eine Heißwasserzubereitung erfolgen, kann dies auch mit einer solchen Zuführ- und Dosiereinrichtung erfolgen, in der lediglich das heiße Wasser erzeugt wird und gegebenenfalls unter Druck dem Trinkgefäß zugeführt wird, d. h. mit einer Zuführ- und Dosiereinrichtung die in diesem Fall nicht für einen Extraktionsvorgang ausgestattet sein braucht. Anschließend wird allerdings die weitere Trinkgefäß-Ausgestaltung der Übersichtlichkeit halber nunmehr lediglich anhand der Kaffeebereitung geschildert, ohne dabei jedoch andere Verwendungsweisen, wie z. B. die zuvor geschilderte Teebereitung oder Heißwasserbereitung auszuschließen. Besonders einfach kann die Verbindung zwischen dem Trinkgefäß und der Brüheinheit bzw. dem Extraktionskopf mittels einer lösbaren Formschluss- und/oder Kraftschlussverbindung hergestellt werden, die zudem auch noch sehr funktionssicher und bedienungsfreundlich ist und somit ein einfaches Austauschen des extrahierten Kaffeesatzes, insbesondere einer Kaffeeportionspackung, ermöglicht.

Ein besonderer Vorteil dieses Trinkgefäßsystems bzw. -konzeptes ist somit, dass der Extraktionskopf gleichzeitig Bestandteil des Trinkgefäßes bildet, so dass der Extraktionskopf nicht kaffeemaschinenseitig und damit z. B. nicht fahrzeugseitig angeordnet ist. Dies bringt den Vorteil mit sich, dass beim Reinigen des Extraktionskopfes bzw. auch beim Beschicken des Extraktionskopfes mit der zu extrahierenden Charge keine Handgriffe erforderlich sind, die kaffeemaschinenseitig und damit z. B. fahrzeugseitig durchgeführt werden müssen, so dass die Gefahr der Verunreinigung eines z. B. Fahrzeuginnenraumes bei entsprechender Handhabung der Bauteile relativ gering bzw. nahezu ausgeschlossen ist. So kann beispielsweise der durch das Trinkgefäß und den Extraktionskopf gebildete Kaffeebecher aus dem Fahrzeug entnommen werden und zu Hause gereinigt werden. Nach dem Reinigungsvorgang kann dann die gereinigte Baueinheit wieder im Fahrzeug verwendet werden. Auch kann gegebenenfalls bereits eine Beschickung des Trink- bzw. Kaffeebechers mit der zu extrahierenden Substanz außerhalb des Fahrzeugs erfolgen. Der gleiche Vorteil ergibt sich bei einer Verwendung dieses Systems im Küchen-, Büro- oder Officebereich oder dergleichen, wo dann jeder für seine Kaffeebereitung selbst zuständig ist und eine Reinigungsarbeit nicht in Verbindung mit der ortsfesten Zapfstelle sondern individuell mit dem eigenen Trinkgefäß erforderlich ist.

Besonders bevorzugt ist hierbei vorgesehen, dass die lösbare Verbindung zwischen dem Trinkgefäß und dem Extraktionskopf im mit der Zapfstelle gekoppelten Zustand mittels einer Verriegelungseinrichtung gesperrt werden kann. Dies erfolgt bevorzugt so, dass ein z. B. federbelastetes Verriegelungselement im mit der Zapfstelle gekoppelten Zustand in eine Verriegelungsstellung verlagert ist, in der beispielsweise ein extraktionskopfseitig ausgebildetes Verriegelungselement mit einem trinkgefäßseitigen Verriegelungselement zusammenwirkt. Beispielsweise kann hierzu konkret eine extraktionskopfaufnahmeseitige Betätigungseinrichtung das Verriegelungselement gegen die Kraft einer Vorspannfeder in eine Eingriffstellung mit einer trinkgefäßseitigen Verriegelungselement-Aufnahme verlagern. Im entkoppelten Zustand zwischen Extraktionskopf und Zapfstelle ist dagegen das Verriegelungselement in eine Entriegelungsstellung verlagert, in der das Verriegelungselement dann die lösbare Verbindung zwischen Trinkgefäß und Extraktionskopf freigibt, so dass diese z. B. auseinandergeschraubt werden können, um einen Reinigungsvorgang durchzuführen.

Ergonomisch günstig und sehr bedienerfreundlich ist für einen einfachen Aufbau zudem vorgesehen, dass das Trinkgefäß bodenwandseitig mit dem Extraktionskopf verbunden ist, d. h., dass die trinkgefäßseitige Einströmöffnung im verbundenen Zustand des Trinkgefäßes mit dem Extraktionskopf am Trinkgefäßboden ausgebildet ist, der unmittelbar einer z. B. Kaffeeportionsaufnahme des Extraktionskopfes zugeordnet ist. Mit einer derartigen Anordnung gelangt somit das Kaffeeextrakt von unten her in das Trinkgefäß, wobei die Verbindung zwischen dem Trinkgefäß und dem Extraktionskopf auf einfache Weise herzustellen ist.

Um das zu extrahierende Kaffeepulver im Wesentlichen im Extraktionskopf zurückzuhalten, ist im Strömungsweg des Kaffeeextraktes wenigstens ein Mittel vorzusehen, das lediglich für das Kaffeeextrakt durchlässig ist. Dieses Mittel ist vorzugsweise extraktionskopfseitig angeordnet, könnte grundsätzlich jedoch auch im Bereich des Trinkgefäßes vorgesehen sein. Denkbar sind hier beispielsweise Membrananordnungen, Lochgitter feinster Perforation oder dergleichen. Falls das trinkgefäßseitige Perforiermittel durch ein Schneidgitter gebildet ist, ist das kaffeeportionsaufnahmeseitige Perforiermittel bevorzugt durch einen in die Kaffeeportionsaufnahme einragenden Dornfortsatz gebildet, der in einer Doppelfunktion gleichzeitig auch als Wasserzuführkanal ausgebildet ist. Durch diese Bauteil- und Funktionsintegration wird ein kompakter Aufbau zur Verfügung gestellt, der zudem einfach hergestellt werden kann. Beispielsweise kann einer derartiger Dornfortsatz als Einschraubteil ausgebildet sein, der dicht in ein entsprechendes Gewindeelement des Extraktionskopfes im Bereich der Kaffeeportionsaufnahme eingeschraubt wird, um dort eine Strömungsverbindung zum weiteren extraktionskopfseitigen Wasserkanal auf einfache und funktionssichere Weise herzustellen.

Die trinkgefäßseitige Einströmöffnung selbst kann auf beliebige Weise gestaltet werden, ist jedoch bevorzugt mittels eines Absperrorgans verschlossen, welches das Einströmen des Kaffeeextraktes in den Gefäßinnenraum freigibt und das Ausströmen des Kaffeeextraktes aus dem Gefäßinnenraum verhindert. Ein derartiges Absperrorgan kann z. B. in der Art eines Rückschlagventils ausgebildet sein. Gemäß einer weiteren bevorzugten Ausgestaltung der Erfindung hierzu ist vorgesehen, dass die Einströmöffnung durch einen von der Gefäßwand, insbesondere von der Bodenwand in den Gefäßinnenraum einragenden Einströmkanal gebildet ist, über den das Kaffeeextrakt in das Trinkgefäß einströmt. Dieser Einströmkanal weist bevorzugt eine solche Höhenerstreckung auf, dass diese in etwa einer vorgegebenen Füllstandshöhe des Kaffeeextraktes im Trinkgefäß entspricht, wodurch auf einfache Weise ein Rückströmen der im Trinkgefäß aufgenommenen Kaffeeextraktmenge unterbunden wird, zusätzlich zum diesem Rückströmen entgegenstehenden Einströmdruck, der durch das hohe Druckniveau der Kaffeebereitung bedingt ist.

Um einen derartigen Extraktionskopf funktionssicher flüssigkeitsdicht ausgestalten zu können, was insbesondere bei der Handhabung als Trinkgefäß notwendig ist, um ein Abtropfen von heißem Wasser bzw. heißem Kaffeeextrakt zu vermeiden, ist gemäß einer weiteren

bevorzugten Erfindungsvariante vorgesehen, dass der Extraktionskopf insbesondere im Bereich eines zum Dornfortsatz führenden und mit diesem strömungsverbundenen Wasserkanal ein Absperrorgan aufweist, das im verbundenen Zustand von Extraktionskopf und Wasserzuführeinrichtung den Wasserstrom von der Zapfstelle zum Extraktionskopf freigibt und im gelösten, unverbundenen Zustand von Extraktionskopf und Zapfstelle den Wasserkanal des Extraktionskopfes nach außen hin abdichtet. Die Verlagerung des Absperrorgans, das vorzugsweise in Richtung Verschlussstellung vorgespannt ist, insbesondere federvorgespannt ist, kann hier entweder selbsttätig mechanisch, beim Ankoppeln des Extraktionskopfes an der Zapfstelle oder mittels Betätigung eines separaten Bedienelementes im angekoppelten Zustand vom Extraktionskopf an der Zapfstelle erfolgen, wobei das Bedienelement mittels einer Betätigungseinrichtung gekoppelt ist, die mit dem Absperrorgan zusammenwirkt. Die Betätigungseinrichtung kann hier durch solche Mittel gebildet sein, die z. B. in Verbindung mit einem Schalter, einem Taster, einem Knopf oder dergleichen als Bedienelement elektronisch angesteuert werden und dann durch entsprechende Antriebsmittel so verlagert werden, dass das Absperrorgan in die Freigabeposition verlagert wird.

Die zapfstellenseitige Freigabe des Dampf- bzw. Wasserstroms wurde bereits eingangs im allgemeinen Teil ausführlich beschrieben und erläutert, und zwar insbesondere in Verbindung mit einer mechanischen und einer elektronischen Steuereinrichtung. Auch hier in der konkreten Ausführungsform in Verbindung mit einem Trinkgefäß gilt wiederum, dass bei einer mechanischen Betätigung des zapfstellenseitigen Absperrelementes durch das Ankoppeln des Extraktionskopfes ein Durchstrom freigegeben ist. Für den Fall, dass eine zusätzliche Kontrolle gewünscht ist, was regelmäßig der Fall sein wird, kann die endgültige Freigabe des Wasserstroms durch Betätigung zusätzlicher Bedienelemente erfolgen, die dann eine endgültige Freigabe des Wasserstroms bzw. des Dampfstroms ermöglichen. Im Falle einer elektrischen Betätigung des zapfstellenseitigen Absperrelementes wird das Durchströmen dann bevorzugt ohnehin erst bei der Betätigung eines entsprechenden Bedienelementes freigegeben. Bezüglich weiterer Ausgestaltungen hierzu wird auf die zuvor gemachten Ausführungen verwiesen.

Gemäß einer weiteren besonders bevorzugten Ausgestaltungsvariante ist der Extraktionskopf zweiteilig aus einem ersten Kopfteil und einem zweiten Kopfteil ausgebildet, wodurch eine besonders einfache Zugänglichkeit im Rahmen der Montage und der Reparatur zu den einzelnen Bauteilen des Extraktionskopfes möglich ist. Gemäß einer besonders bevorzugten konkreten Ausgestaltung sind die beiden Kopfteile miteinander lösbar verbunden, und zwar mittels einer Schraubverbindung miteinander verschraubbar, und zwar dergestalt, dass das eine Kopfteil in das andere Kopfteil einschraubbar ist, so dass diese dicht aneinander liegen. Die Verbindung zwischen dem Extraktionskopf einerseits und der Zapfstelle andererseits erfolgt dann bei dieser Ausführungsvariante zwischen dem zweiten, vorzugsweise das Absperrorgan zur Zapfstelle aufweisenden zweiten Kopfteil und eben der Zapfstelle, insbesondere mit einer dort ausgebildeten Extraktionskopfaufnahme mitsamt Anschlussstutzen.

Gemäß einer weiteren, besonders bevorzugten Erfindungsvariante kann das Zapfstellen-Anschlusselement als Hot-Towel-Aufnahmebehältnis ausgebildet sein, das z. B. mit einer erfindungsgemäßen Zapfstelle als Zuführeinrichtung für Heißwasser oder Dampf gekoppelt werden kann und das in seinem Hot-Towel-Aufnahmeraum ein Erfrischungstuch oder Handtuch zur Beaufschlagung mit Heißwasser oder Dampf vorgegebener Temperatur aufnehmen kann. Ein derartiges auch Oshibori bezeichnetes feuchtes Erfrischungstuch oder feuchtes Handtuch wird bekanntermaßen oftmals in Flugzeugen zur Erfrischung oder in Restaurants vor dem Essen gereicht. Es wird dazu benutzt, um sich die Hände oder auch das Gesicht zu Reinigen. Dementsprechend ist das Erfrischungs- oder Handtuch gemäß einer bevorzugten Ausführungsform aus Baumwolle.

Das Hot-Towel-Aufnahmebehältnis weist einen insbesondere bodenseitig ausgebildeten Wasser- und/oder Dampfeinlass auf, der insbesondere durch eine zentrale Einströmöffnung und/oder einen zentralen Einströmkanal ausgebildet ist, auf. Über diesen Wasser- und/oder Dampfeinlass kann das heiße Wasser oder der Dampf im mit der Zapfstelle verbundenen Zustand des Hot-Towel-Aufnahmebehältnisses in dieses einströmen und das Erfrischungstuch oder Handtuch, das im Aufnahmebehältnis angeordnet ist, entsprechend beaufschlagen, so dass es zur Erfrischung benutzt werden kann. Das über die Zapfstelle zur Verfügung gestellte Wasser bzw. der über die Zapfstelle zur Verfügung gestellte Dampf wird aus dem mit der Zapfstelle funktionell gekoppelten Wasserspeicher entnommen, dem vorzugsweise Wasser mit einer vorgegebenen Menge eines Duft- und/oder Desinfektionsmittels beigemischt ist.

Gemäß einer konkreten Ausgestaltung weist das Hot-Towel-Aufnahmebehältnis aufnahmeraumseitig wenigstens eine Düse auf, die mittels eines Düsenkanals mit dem Wasser- und/oder Dampfeinlass, insbesondere mit einem Einströmkanal oder mit einer Einströmöffnung, strömungsverbunden ist.

Diese wenigstens eine Düse kann grundsätzlich auf unterschiedliche Art und Weise hergestellt werden. Herstellungstechnisch besonders einfach ist die Ausbildung der Düsen gemäß folgender Ausführungsform: In eine Aufnahmeöffnung eines mit der Zapfstelle verbindbaren Grundkörpers des Hot-Towel-Aufnahmebehältnisses wird ein den Hot-Towel-Aufnahmeraum ausbildendes, schalenartiges Einsatzteil formschlüssig eingesetzt. Dieses Einsatzteil bildet dann zwischen sich und dem Grundkörper wenigstens einen sich entlang eines vorgegebenen Umfangbereiches und sich über eine vorgegebene geodätische Höhe bezüglich des Hot-Towel-Aufnahmeraums erstreckenden Düsenkanal aus. Dieser wenigstens eine Düsenkanal mündet einerseits in das Einsatzteil und damit in den Hot-Towel-Aufnahmeraum und ist andererseits mit dem Wasser- oder Dampfeinlass strömungsverbunden. Ein weiterer Vorteil eines derartigen Aufbaus ist, dass das Einsatzteil relativ leicht auch wieder entnommen werden kann, um z. B. eine Reinigung des Hot-Towel-Aufnahmeraums unabhängig vom Hot-Towel-Aufnahmebehältnis-Grundkörper, der das Zapfstellen-Anschlusselement aufweist, durchführen zu können.

Bevorzugt ist hierbei vorgesehen, dass der wenigstens eine Düsenkanal im Bereich eines Hot-Towel-Aufnahmeraumbodens in einen grundkörperseitigen Einströmkanal mündet. Weiter bevorzugt ist eine Mehrzahl von voneinander umfangsseitig beabstandeten Düsen vorgesehen, die zudem wenigstens zum Teil auch auf geodätisch unterschiedlichen Höhen bezüglich des Hot-Towel-Aufnahmeraums angeordnet sein können. Damit wird eine zuverlässige Verteilung und damit Befeuchtung des Erfrischungstuchs oder Handtuchs möglich, ohne dass trockene Stellen an diesem vorhanden sind.

Um eine Befeuchtung des Erfrischungstuchs oder Handtuchs auch von einem zentralen mittleren Bereich ausgehend, um den das Erfrischungstuch oder Handtuch herumgewickelt ist, zu erzielen, ist gemäß einer weiteren bevorzugten Ausgestaltung zudem vorgesehen, dass das Hot-Towel-Aufnahmebehältnis ein sich über eine vorgegebene Hot-Towel-Aufnahmeraumhöhe erstreckenden, insbesondere sich mittig im Hot-Towel-Aufnahmeraum erstreckenden Aufnahmeraumdorn aufweist. Dieser Aufnahmeraumdorn weist wenigstens eine aufnahmeraumseitig mündende Düse auf, die mittels eines Düsenkanals mit dem Wasser- und/oder Dampfeinlass, insbesondere mit einem Einströmkanal oder mit einer Einströmöffnung, strömungsverbunden ist. Auch hier gilt wieder das zuvor Gesagte, nämlich dass dieser wenigstens eine Düsenkanal im Bereich eines Hot-Towel-Aufnahmeraumbodens in einen grundkörperseitigen Einströmkanal mündet.

Weiter sind gemäß einer bevorzugten Ausgestaltung grundsätzlich eine Mehrzahl von voneinander umfangsseitig beabstandeten Düsen und/oder Düsenkanälen vorgesehen, die wiederum alternativ oder zusätzlich wenigstens zum Teil auf geodätisch unterschiedlichen Höhen bezüglich des Hot-Towel-Aufnahmeraums liegen können.

Insbesondere in Verbindung mit einem Einsatzteil ist es vorteilhaft, dass der Aufnahmeraumdorn durch eben dieses Einsatzteil integral ausgebildet ist.

Für eine einfache Herstellung der aufnahmeraumdornseitigen Düsen kann hier wiederum vorgesehen sein, dass der Aufnahmeraumdorn innen hohl ausgebildet ist, so dass in diesen Hohlraum des Aufnahmeraumdorns ein Dorneinsatz formschlüssig eingesteckt werden kann, wobei zwischen dem eingesteckten Dorneinsatz und dem Aufnahmeraumdorn dann wenigstens ein, sich entlang eines vorgegebenen Umfangbereiches und sich über eine vorgegebene geodätische Höhe erstreckender Düsenkanal ausgebildet wird. Dieser Düsenkanal mündet einerseits in den Aufnahmeraumdorn und damit in den Hot-Towel-Aufnahmeraum und ist andererseits mit dem Wasser- und/oder Dampfeinlass, insbesondere mit einem Einströmkanal oder mit einer Einströmöffnung, strömungsverbunden.

Die einfache Herstellung der Düsenkanäle ergibt sich hier, wie auch zuvor in Verbindung mit dem Einsatzteil für die wandseitigen Düsenkanäle dadurch, dass hier auf einfache Weise, z. B. an der Einsatzteilaußenwand bzw. an der Dorneinsatzaußenwand Düsenbohrungen bzw. Düsenkanalbohrungen gefertigt und vorgesehen werden können. Alternativ können selbstverständlich diese Düsenkanalbohrungen auch grundkörperseitig bzw. beim Aufnahmeraumdorn hohlraumseitig vorgesehen sein.

Die umfängsseitige Beabstandung der Düsen bzw. Düsenkanäle bzw. die auf unterschiedlichen geodätischen Höhen liegenden Düsen kann selbstverständlich auch hier vorgesehen sein.

Gemäß einer weiteren bevorzugten Ausgestaltung kann das Hot-Towel-Aufnahmebehältnis mit einem Deckel lösbar verschlossen sein. An der Deckelunterseite kann hier z. B. auch ein Deckelfortsatz ausgebildet sein, der im montierten Zustand des Deckels mit dem Dorneinsatz zusammenwirkt und sich an diesem in einer Anlageverbindung abstützt und/oder diesen in seiner Position hält.

Der Deckel kann an seiner Unterseite zudem mit einer Steckhülse versehen sein, die sich im montierten Zustand des Deckels im Wesentlichen über die gesamte Hot-Towel-Aufnahmeraumlänge erstreckt und auf der auf einfache Weise das mit Wasser oder Dampf zu beaufschlagende Erfrischungstuch oder Handtuch aufgewickelt werden kann. Diese Steckhülse ist im montierten Zustand zudem dergestalt formschlüssig auf den zuvor bereits ausführlich erläuterten Aufnahmedorn aufgesteckt, dass entsprechend ausgebildete und vorgesehene steckhülsenseitige Wasser- oder Dampfauslassdüsen mit den aufnahmedornseitigen Düsen fluchten und eine Wasser- bzw. Dampfabgabe durch die Steckhülse hindurch in den Hot-Towel-Aufnahmeraum hinein, in dem das Erfrischungstuch oder Handtuch angeordnet ist, ermöglichen.

Damit der Deckel stets so positioniert wird, dass die aufnahmedornseitigen und steckhülsenseitigen Wasser- und/oder Dampfauslassdüsen miteinander fluchten, können am Deckel und am Aufnahmebehältnis, insbesondere z. B. am Grundkörper und/oder Einsatzteil Mittel vorgesehen sein, die eine stets richtige Deckelpositionierung bezüglich der fluchtenden Düsen gewährleisten. Beispielsweise können dies entsprechende Rastnasen sein.

Der Hot-Towel-Aufnahmeraum weist zudem eine längliche, zylindrische Innengeometrie auf, in dem das Erfrischungs- oder Handtuch in gerolltem Zustand und/oder im Wesentlichen formschlüssig aufgenommen ist, wodurch eine hervorragende und funktionssichere Feuchtigkeitsbeaufschlagung durchgeführt werden kann.

Gemäß einer weiteren bevorzugten konkreten Ausgestaltung ist der aufnahmebehältnisseitige Wasser- und/oder Dampfeinlass, der insbesondere durch einen Einströmkanal und/oder eine Einströmöffnung gebildet ist, mittels eines verlagerbaren Absperrorgans verschließbar, wobei das Absperrorgan vorzugsweise in die Verschlussposition vorgespannt, insbesondere federvorgespannt ist. Das Absperrorgan kann hier ähnlich wie zuvor in Verbindung mit dem Extraktionskopf geschildert so ausgebildet sein, dass dieses im verbundenen Zustand von Hot-Towel-Aufnahmebehältnis und Zapfstelle den Dampf- und/oder Wasserstrom von der Zapfstelle zum Hot-Towel-Aufnahmebehältnis selbsttätig oder aufgrund einer zusätzlichen Betätigung eines Bedienelementes freigibt, während es im gelösten, unverbundenen Zustand von Hot-Towel-Aufnahmebehältnis und Zapfstelle den Wasser- und/oder Dampfeinlass zuverlässig verschließt bzw. abdichtet.

Die zapfstellenseitige Freigabe des Dampf- bzw. Wasserstroms wurde bereits eingangs im allgemeinen Teil ausführlich beschrieben und erläutert, und zwar insbesondere in Verbindung mit einer mechanischen und einer elektronischen Steuereinrichtung. Auch hier in der konkreten Ausführungsform in Verbindung mit einem Hot-Towel-Aufnahmebehältnis gilt wiederum, dass bei einer mechanischen Betätigung des zapfstellenseitigen Absperrelementes durch das Ankoppeln des Hot-Towel-Aufnahmebehältnisses ein Durchstrom freigegeben ist. Für den Fall, dass eine zusätzliche Kontrolle gewünscht ist, was regelmäßig der Fall sein wird, kann die endgültige Freigabe des Wasserstroms durch Betätigung zusätzlicher Bedienelemente erfolgen, die dann eine endgültige Freigabe des Wasserstroms bzw. des Dampfstroms ermöglichen. Im Falle einer elektrischen Betätigung des zapfstellenseiten Absperrelementes wird das Durchströmen dann bevorzugt ohnehin erst bei der Betätigung eines entsprechenden Bedienelementes freigegeben. Bezüglich weiterer Ausgestaltungen hierzu wird auf die zuvor gemachten Ausführungen verwiesen.

Um insbesondere ein Design eines Zapfstellen-Anschlusselementes, insbesondere eines Kaffeebechers bzw. eines Hot-Towel-Behältnisses, an z. B. ein wiederkehrendes Designelement eines Fahrzeug-Interieurdesigns anzupassen, z. B. an ein Sichtblendendesign, kann dieses an seiner Sichtseite als Außenwand wenigstens ein Dekorelement aufweisen, das bevorzugt als ringartige Aufsteckhülse ausgebildet ist. Bevorzugt ist das Behältnis in Verbindung mit dem Dekorelement so modular aufgebaut, dass die Aufsteckhülse z. B. auf einen Aufsteckbereich eines Extraktionskopfes eines Kaffeebechers im Wesentlichen formschlüssig aufgesetzt werden kann und sich dort z. B. an einem Ringbund des

Extraktionskopfes abstützt. Anschließend wird dann das Behältnis mit dem Extraktionskopf z. B. verschraubt, so dass ein z. B. behältnisseitiger Ringbund ebenfalls in eine Abstütz- und Anlageverbindung an der Aufsteckhülse gelangt, so dass diese im Wesentlichen sicher und positionsgenau zwischen Behältnis und Extraktionskopf fixiert und gehaltert ist. Ein analoger Aufbau ist selbstverständlich auch mit einem Hot-Towel-Aufnahmebehältnis möglich.

Die Erfindung wird nachfolgend anhand einer Zeichnung näher erläutert.

Es zeigen:
- Fig. 1: schematisch eine perspektivische Ansicht eines Fahrzeuginnenraums mit einer im Bereich einer Mittelkonsole zwischen zwei benachbarten Frontsitzpositionen angeordneten erfindungsgemäßen Vorrichtung als Heißwasserbereitungsmodul,
- Fig. 2: schematisch die Darstellung gemäß Fig. 1 mit einem im Bereich einer Zapfstelle des Heißwasserbereitungsmoduls angekoppeltem Kaffeebecher,
- Fig. 3: schematisch eine perspektivische Darstellung des Heißwasseraufbereitungsmoduls im zusammengebauten Zustand,
- Fig. 4: schematisch eine Sichtblende des Heißwasserbereitungsmoduls der Fig. 3 mitsamt einem Modul-Aufnahmegehäuse,
- Fig. 5: schematisch eine perspektivische Innenansicht des Modul-Aufnahmegehäuses,
- Fig. 6: schematisch das Modul-Aufnahmegehäuse der Fig. 5 mit eingebautem Wasserbehälter und eingebauter Zapfstelle,
- Fig. 7: eine schematische Darstellung gemäß Fig. 6 mit aufgesetzter fahrzeugseitig sichtbarer Sichtblende,
- Fig. 8: eine schematische, perspektivische Explosionsdarstellung des Sichtblenden- und Modul-Aufnahmegehäuse-Zusammenbaus mitsamt im Bereich der Zapfstelle eingesetztem Kaffeebecher,
- Fig. 9: schematisch und perspektivisch eine Montagebox zur Aufnahme einer eine elektrische Pumpe und einen elektrisch beheizbaren Thermoblock als Heizblock umfassenden Heizeinrichtung,
- Fig. 10: die Montagebox im zusammengebauten Zustand in einer perspektivischen Draufsicht,
- Fig. 11: die Montagebox gemäß Fig. 9 und 10 im zusammengebauten Zustand sowie in einer perspektivischen Unteransicht,
- Fig. 12: eine schematische, perspektivische Explosionsdarstellung der Montagebox gemäß Fig. 11 mit elektrischer Pumpe und Thermoblock,
- Fig. 13: die Bauteile der Fig. 12 im zusammengebauten Zustand in einer perspektivischen Draufsicht bzw. perspektivischen Innenansicht der Montagebox,
- Fig. 14: eine perspektivische Unteransicht der Montagebox und des Modul-Aufnahmegehäuses mit einer Leitungsverbindung,
- Fig. 15: eine schematische Schnittansicht einer Ausführungsform eines Zapfstellen-Anschlusselementes und einer als Ventilelement ausgebildeten Zapfstelle im nichtverbundenen Zustand von Zapfstellen-Anschlusselement und Zapfstelle,
- Fig. 16: die schematische Darstellung gemäß Fig. 15 im angeschlossenen bzw. angekuppelten Zustand von Zapfstellen-Anschlusselement an der Zapfstelle,
- Fig. 17: eine schematische, explosionsartig dargestellte Schnittdarstellung eines Kaffeebechers als Zapfstellen-Anschlusselement mitsamt Zapfstelle,
- Fig. 18: die Darstellung gemäß Fig. 17 im zusammengebauten, montierten und angekoppelten Zustand,
- Fig. 19: ein Hot-Towel-Aufnahmebehältnis als Zapfstellen-Anschlusselement im zusammengebauten Zustand und mit im Hot-Towel-Aufnahmeraum angeordnetem Handtuch,
- Fig. 20: schematisch eine Explosions-Schnittdarstellung eines Grundkörpers, eines Einsatzteils und eines Dorneinsatzes des Hot-Towel-Aufnahmebehältnisses,
- Fig. 21: eine schematische Schnittdarstellung des Grundkörpers, des Einsatzteils und des Dorneinsatzes der Fig. 20 im zusammengebauten Zustand sowie des noch zu montierenden Deckels des Hot-Towel-Aufnahmebehältnisses,
- Fig. 22: schematisch eine vergrößerte Schnittdarstellung durch die im Grundkörper des Hot-Towel-Aufnahmebehältnisses ausgebildete Mechanik zur Freigabe des Heißwasserstroms zum Hot-Towel-Aufnahmebehältnis hin, und zwar im in die Zapfstelle eingesetzten Zustand,
- Fig. 23: schematisch eine perspektivische, auseinandergezogene Darstellung eines Kaffeebechers mit einem zusätzlichen, als Aufsteckhülse ausgebildeten Dekorelement, und
- Fig. 24: den Kaffeebecher gemäß Fig. 23 im zusammengebauten Zustand sowie in einer schematischen Seitenansicht.

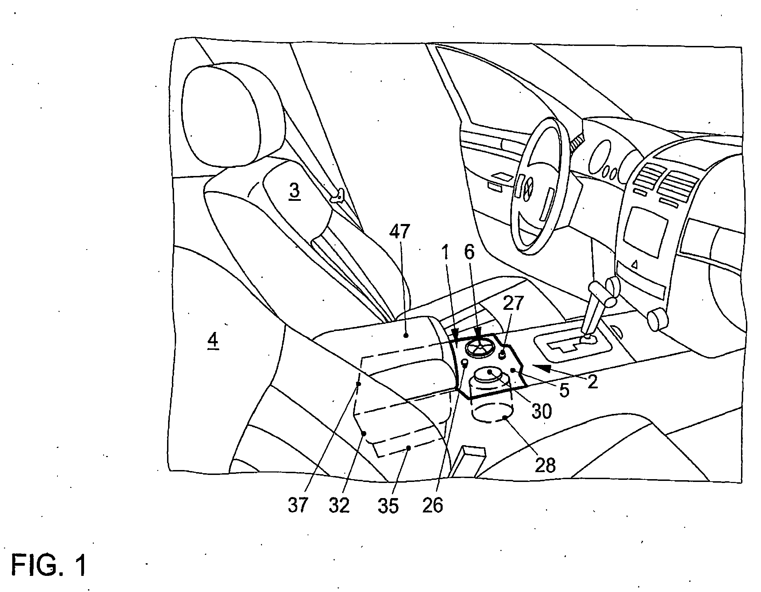

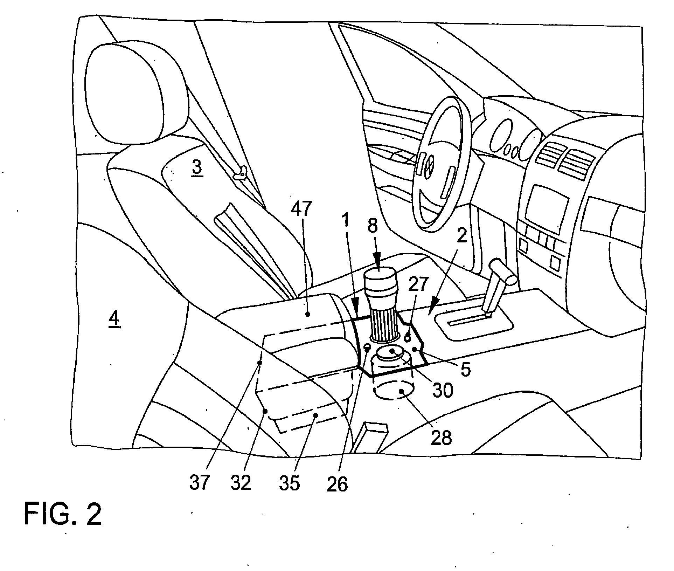

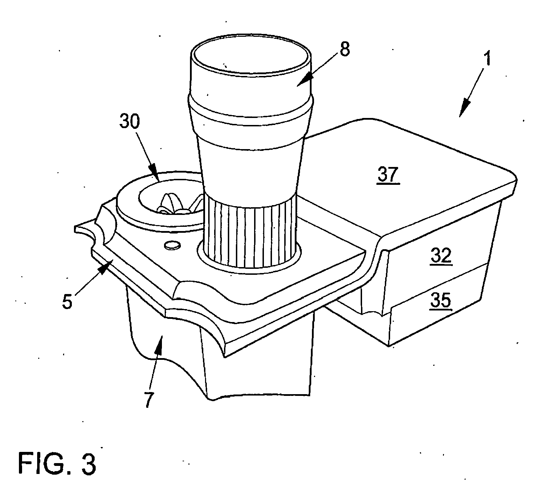

In den Fig. 1 und 2 ist eine bevorzugte Ausführungsform einer erfindungsgemäßen Vorrichtung zur Heißwasser- oder Dampferzeugung als Heißwasserbereitungsmodul 1, wie es schematisch und perspektivisch in der Fig. 3 dargestellt ist, in einer bevorzugten Verwendung im Bereich einer Mittelkonsole 2 eines Fahrzeuginnenraums zwischen einem Fahrersitz 3 und einem Beifahrersitz 4 gezeigt.

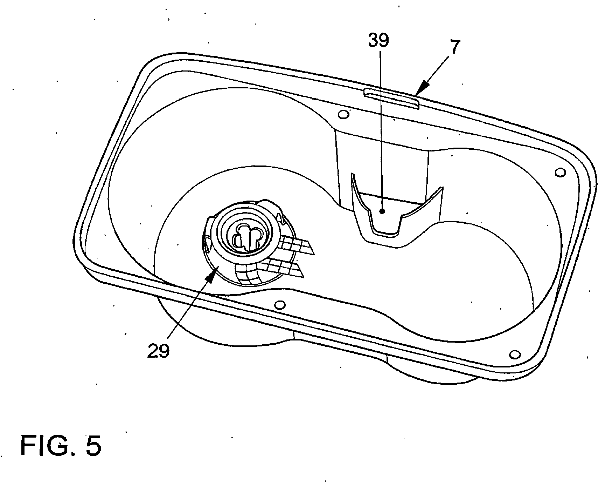

Konkret umfasst das Heißwasserbereitungsmodul 1, wie es in der Fig. 3 im unverbauten Zustand dargestellt ist, eine Sichtblende 5, die im montierten Zustand des Heißwasserbereitungsmoduls 1 Bestandteil der Mittelkonsole 2 bildet, wie dies aus den Fig. 1 und 2 ersichtlich ist. In dieser Sichtblende 5 mündet eine in der Art einer Wassersteckdose ausgebildete Zapfstelle 6, die in der Art eines Ventilelementes ausgebildet ist, was nachfolgend noch in Verbindung mit konkreten Ausführungsformen näher erläutert wird, wobei die Zapfstellenbauteile in einem sich an die Sichtblende 5 nach unten hin anschließenden Modul-Aufnahmegehäuse 7, das in der Fig. 5 in einer schematischen und perspektivischen Draufsicht gezeigt ist, aufgenommen sind. Dieses Modul-Aufnahmegehäuse 7 ist im verbauten Zustand im Bereich der Mittelkonsole 2 verstaut aufgenommen, so dass im Fahrzeuginnenraum lediglich die Sichtblende 5 mit Zapfstelle 6 sichtbar und für den Anschluss eines z. B. Kaffeebechers 8 für eine Kaffeebereitung zugänglich ist, wie dies schematisch in der Fig. 2 und in der Fig. 3 dargestellt ist, die jeweils einen mit der Zapfstelle 6 verbundenen Kaffeebecher 8 zeigt, um für eine Kaffeebereitung über die Zapfstelle 6 eine Heißwassermenge abzuzapfen, was nachfolgend mit einem konkreten Ausführungsbeispiel noch näher erläutert wird.

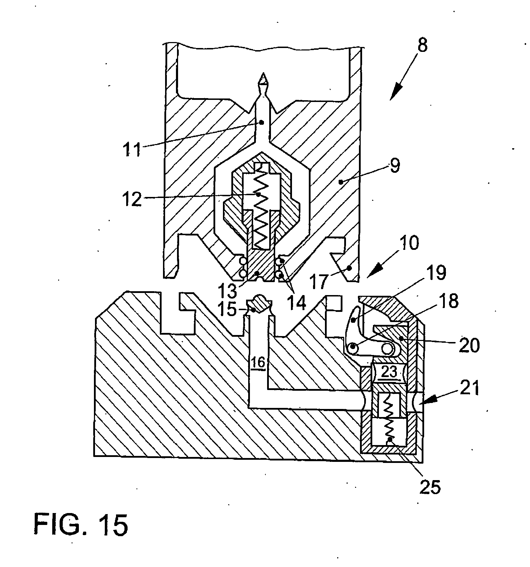

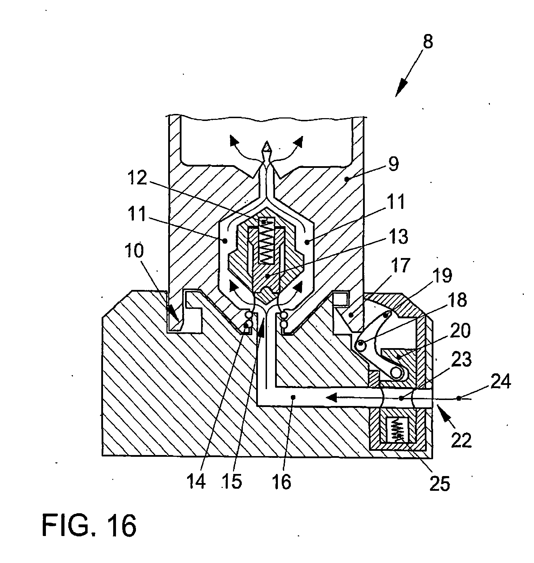

In den Fig. 15 und 16 wird nunmehr die Funktionsweise des Anschlusses eines z. B. als Kaffeebecher 8 ausgebildeten Anschluss-Gegenelementes an eine als Ventilelement ausgebildete Zapfstelle 6 lediglich beispielhaft und schematisch dargestellt und beschrieben: Die Fig. 15 zeigt hier lediglich einen unteren als Anschluss-Gegenelement 9 ausgebildeten Bereich eines z. B. als Kaffeebecher 8 ausgebildeten Zapfstellen-Anschlusselementes, das mittels einer Bajonett-Verschlussverbindung 10 mit der Zapfstelle 6 lösbar verriegelt verbunden werden kann, wie dies in der Fig. 16 dargestellt ist.

Im Anschluss-Gegenelement 9 ist ein Einströmkanal 11 ausgebildet, der in der in Fig. 15 gezeigten Grundstellung mittels eines in die Schließrichtung mittels einer Feder 12 vorgespannten Absperrmittels 13 als verlagerbares Absperrorgan dicht verschlossen ist, wozu im bodenseitigen Mündungsbereich des Einströmkanals 11 zudem Dichtelemente 14 angeordnet sind.

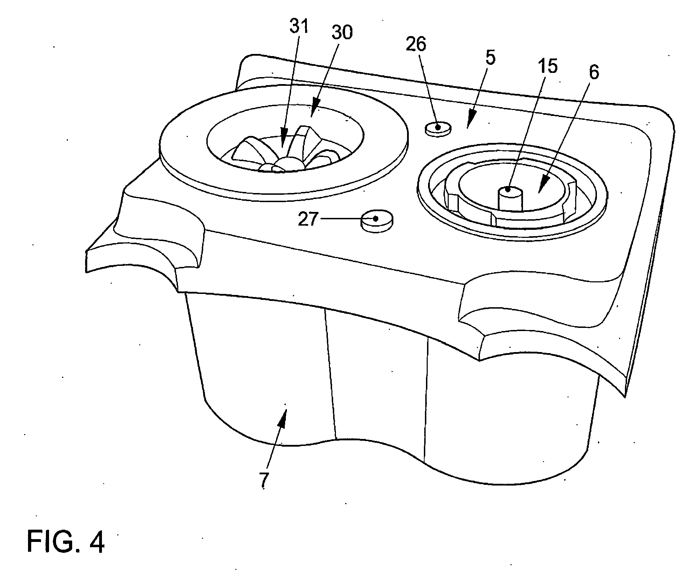

Im angekoppelten Zustand drückt dann ein zapfstellenseitiger Zapfstutzen 15, wie er schematisch auch in der Fig. 4 gut ersichtlich dargestellt ist, das Absperrmittel 13 gegen die Kraft der Feder 12 in die in der Fig. 16 gezeigte Freigabeposition, in der der anschlussgegenelementseitige Einströmkanal 11 dann mit dem zapfstellenseitig im Zapfstutzen 15 mündenden Zapfstellenströmungskanal als Ventilelement-Strömungskanal 16 strömungsverbunden ist. Dadurch ist der Strömungsweg von z. B. Heißwasser in das z. B. als Kaffeebecher 8 ausgebildete Zapfstellen-Anschlusselement hinein freigegeben.

Wie dies der Darstellung der Fig. 15 und 16 zudem hier lediglich beispielhaft weiter entnommen werden kann, kann ein anschlussgegenelementseitiger Verriegelungshaken 17 einer Bajonett-Verschlussverbindung 10, zur Freigabe der Wasser- bzw. Dampfzufuhr in den Ventilelement-Strömungskanal 16 hinein und damit in den Einströmkanal 11 hinein beim Einsetzen des Anschlussgegenelementes 9 in die Zapfstelle 6, einen zapfstellenseitig schwenkbar um eine Schwenkachse 18 gelagerten Sicherheitshebel 19, der mit einem Hebelende mit einem Sicherheitsbolzen 20 zusammenwirkt, so verlagern, dass dieser Sicherheitsbolzen 20 durch die Verlagerung des Sicherheitshebels 19 aus der in der Fig. 15 dargestellten Verschlussposition 21 in die in der Fig. 16 dargestellte Freigabeposition 20 verlagert wird. In dieser in der Fig. 16 dargestellten Freigabeposition fluchtet eine sicherheitsbolzenseitig vorgesehene Durchströmöffnung 23 mit dem Ventilelement-Strömungskanal 16 und gibt einen z. B. Heißwasserstrom in den Ventilelement-Strömungskanal 16 frei, wie dies mit dem Pfeil 24 lediglich schematisch angedeutet ist.

Wie dies den schematischen Darstellungen der Fig. 15 und 16 zudem weiter entnommen werden kann, wird der Sicherheitsbolzen 20 mitsamt Sicherheitshebel 19 in der Grundstellung durch eine Feder 25 in die Verschlussposition 21 vorgespannt.

Bei dieser in Verbindung mit der Fig. 15 und 16 lediglich beispielhaft und schematisch erläuterten grundsätzlichen Funktionsweise der Wasser- bzw. Dampfbereitstellung über eine Zapfstelle in Verbindung mit einem Zapfstellen-Anschlusselement erfolgt die Freigabe des Strömungswegs von der Zapfstelle 6 in das z. B. als Kaffeebecher 8 ausgebildete Zapfstellen-Anschlusselement hinein im Wesentlichen mechanisch und selbsttätig. Alternativ zur mechanischen Betätigung des Sicherheitsbolzens 20 kann die Verlagerung des Sicherheitsbolzens 20 aber gegebenenfalls auch unter Zuhilfenahme von Fremdenergie, insbesondere elektronisch erfolgen, in dem z. B. durch Betätigung eines Bedienknopfes entsprechend des hier gezeigten und bezüglich seiner Funktionsweise nachfolgend noch näher erläuterten Bedienknopfes 26, wie er lediglich beispielhaft und schematisch in der Fig. 4 dargestellt ist, über einen Hilfsantrieb, der hier nicht dargestellt ist, eine entsprechende Verlagerung erfolgt.

Weiter alternativ kann ein derartiger Bedienknopf 26 aber in Verbindung mit der in der Fig. 15 und 16 gezeigten Ausführungsform aber auch vorgesehen sein, um, was nachfolgend noch näher erläutert wird, eine Heizeinrichtung zu bedienen, die eine Pumpe und einen Thermoblock aufweist, um die Heißwasserbereitung und damit die Heißwassererzeugung erst in Gang zu setzen, d. h., dass in Verbindung mit einer Ausgestaltung, wie sie in den Fig. 15 und 16 erläutert wurde, zuerst einmal nur der Strömungsweg in den z. B. Kaffeebecher 8 hinein freigegeben wird, bevor die eigentliche Heißwasser- bzw. Dampfbereitung, -erzeugung und - zufuhr durch Betätigung des Bedienknopfes 26 erfolgt.

Der in Verbindung mit der Darstellung der Fig. 4 weitere dargestellte Bedienknopf 27 kann z. B. in Verbindung mit dem Bedienknopf 26 einerseits einen Einschalter (Bedienknopf 26) und andererseits einen Ausschalter (Bedienknopf 27) zur Verfügung stellen, mit dem das Heißwasserbereitungsmodul 1 abgeschaltet wird, wenn genügend Heißwasser bzw. Heißdampf abgezapft worden ist.

Die eben beschriebenen Varianten stellen beispielhaft nur einen Teil von verschiedenen Möglichkeiten dar, um eine entsprechende Steuerung einer Heißwasserbereitung bzw. einer Heißdampfbereitung zu realisieren und wurden hier nur beispielhaft näher erläutert, um eine Art der konkreten Ausführung des erfindungsgemäßen Heißwasserbereitungsmoduls 1 zu erläutern.

Wie dies den Fig. 1 bis 5 zudem weiter entnommen werden kann, ist der Zapfstelle 6 ferner ein einen Wasserspeicher ausbildender Wasserbehälter 28 zugeordnet, der, ebenfalls im Modul-Aufnahmegehäuse 7 aufgenommen und dort mit einem in der Fig. 5 lediglich äußerst schematisch dargestellten Wasserbehälter-Anschlussstutzen 29 strömungsverbunden ist, mittels dem Wasser aus dem Wasserbehälter 28 zur Heizeinrichtung abgezogen werden kann, wie dies nachfolgend noch näher erläutert wird.

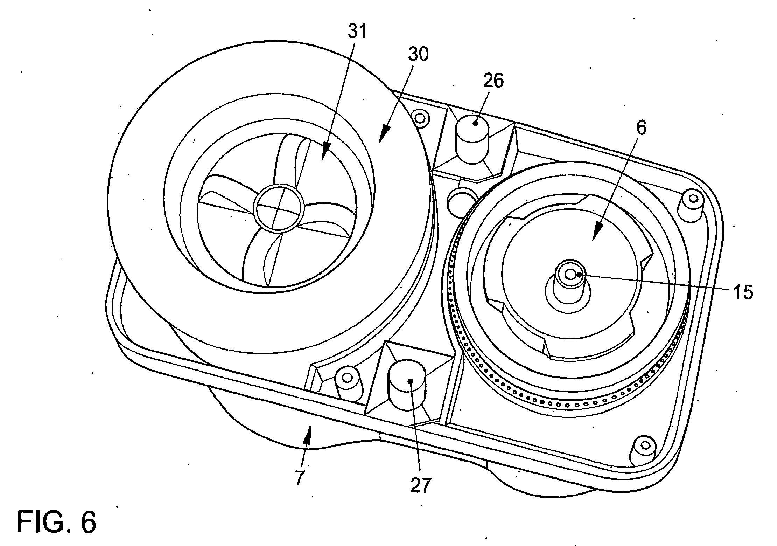

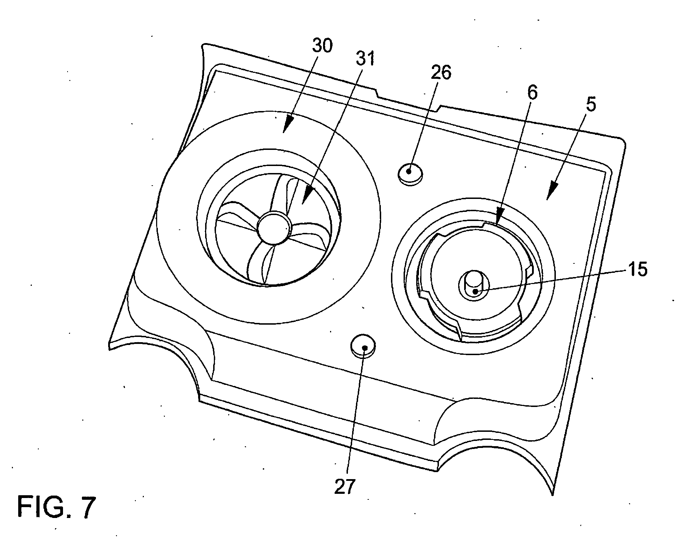

Dieser Wasserbehälter mündet, wie dies insbesondere auch den Figuren 6 und 7 entnommen werden kann, die unterschiedliche Zusammenbau-Zustände dieses Modul-Aufnahmegehäuses 7 zeigen, ebenfalls in der Sichtblende 5, wobei die Behälteröffnung des Wasserbehälters 28 mit einem Behälterdeckel 30 lösbar verschlossen ist, der in einer Doppelfunktion gleichzeitig an seiner Deckeloberseite mit einer Cupholder-Funktion 31 versehen ist. Damit kann, wie dies insbesondere auch der Fig. 1 und der Fig. 2 entnommen werden kann, im Fahrzeug verbauten Zustand eine einfache Befüllung des Wasserbehälters 28 zur Verfügung gestellt werden, da hierzu lediglich der frei zugängliche Behälterdeckel 30 abgeschraubt werden muss.

In der Fig. 6 ist der Zusammenbau-Zustand des Modul-Aufnahmegehäuses 7 ohne Abdeckung durch die Sichtblende 5 gezeigt, wobei hier auch noch mal sehr gut die beispielhafte Anordnung der beiden Bedienknöpfe 26 und 27 ersichtlich ist, deren Elektronik ebenfalls im Modul-Aufnahmegehäuse 7 aufgenommen ist. Fig. 7 stellt dann den Zusammenbau-Zustand dar, in dem die Sichtblende 5 verbaut ist. Diese Sichtblende 5 wird bevorzugt mit einem solchen z. B. Holzdekor oder dergleichen versehen bzw. aus einem solchen ausgebildet, das sich harmonisch in das Innenraumdesign des Fahrzeuges einpasst, z. B. identisch mit den Dekoreinlagen ausgebildet ist.

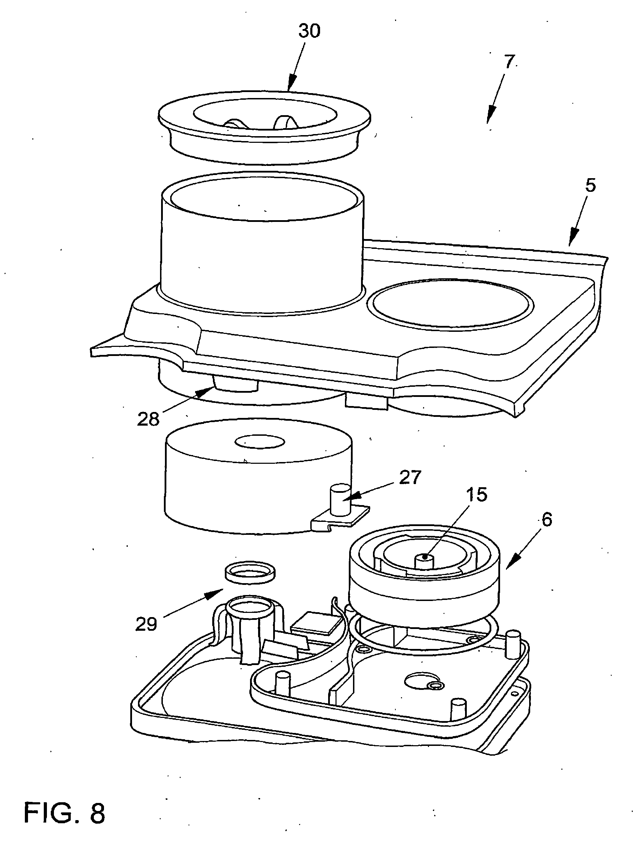

In der Fig. 8 ist der Zusammenbau des Modul-Aufnahmegehäuses 7 nochmals in einer perspektivischen Explosionsdarstellung gezeigt. Die Bauteile wurden zuvor bereits hinsichtlich ihrer Funktion ausführlich dargestellt, so dass hierauf nicht mehr näher eingegangen wird.

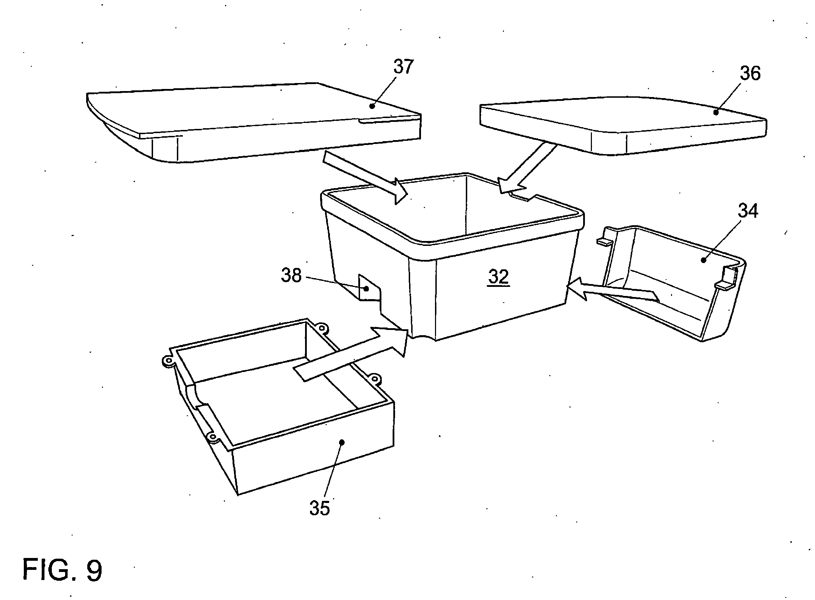

Wie dies weiter aus der Fig. 3 in Verbindung mit den Fig. 9 bis 14 ersichtlich ist, weist das Heißwasserbereitungsmodul 1 ferner eine Montagebox 32 als Aufnahmegehäuse für eine Heizeinrichtung 33 auf. Diese Montagebox kann je nach Fahrzeugtyp unterschiedlich ausgebildet sein, wie dies lediglich äußerst schematisch und beispielhaft in der Fig. 9 dargestellt ist. So kann z. B. die Montagebox 32 für eine Ausführungsform, bei der in der Fahrzeuglängsrichtung mehr Stauraum im Bereich einer Mittelkonsole 2 vorhanden ist, mit einer Zusatzbox 34 ausgestattet sein, die insbesondere über eine Schraubverbindung seitlich an die Montagebox 32 angebaut wird. Dies kann z. B. bei Limousinen, insbesondere Oberklasse-Limousinen der Fall sein. Für Fahrzeugtypen, wie z. B. SUV's, ist dagegen gegebenenfalls mehr Bauraum in Fahrzeughochachsenrichtung als Stauraum für die Montagebox 32 vorhanden, so dass eine Zusatzbox 35 hier an einer Unterseite der Montagebox 32 befestigt werden kann, z. B. über eine Schraubverbindung. In derartigen Zusatzboxen wird bevorzugt die Elektrik verstaut, wie sie für eine in der Montagebox 32 aufgenommene Heizeinrichtung 33 erforderlich ist.

Ebenso können unterschiedliche Montagebox-Deckel 36, 37 bereitgestellt sein, die ebenfalls je nach Fahrzeugtyp unterschiedlich von der Länge, Breite und Höhe ausgebildet sein können.

Nachfolgend wird die weitere Ausgestaltung der Montagebox 32 ausschließlich in Verbindung mit einer unterhalb der Montagebox 32 angeordneten Zusatzbox 35 erläutert, ein analoger Aufbau mit einer seitlich angeordneten Zusatzbox 34 ist jedoch ebenfalls jederzeit möglich.

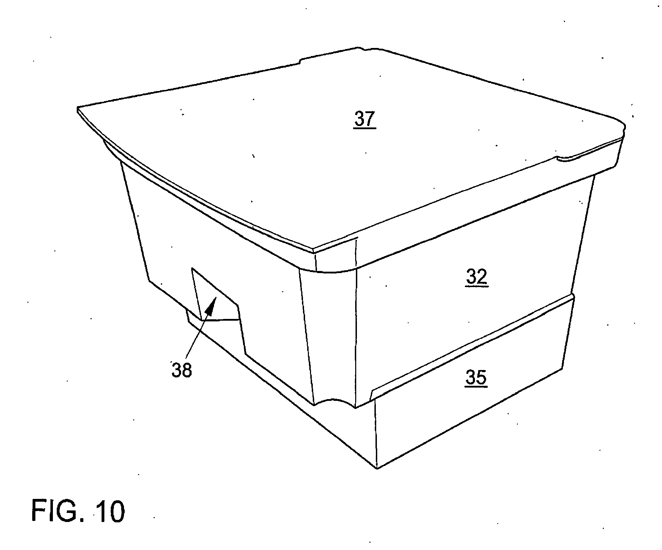

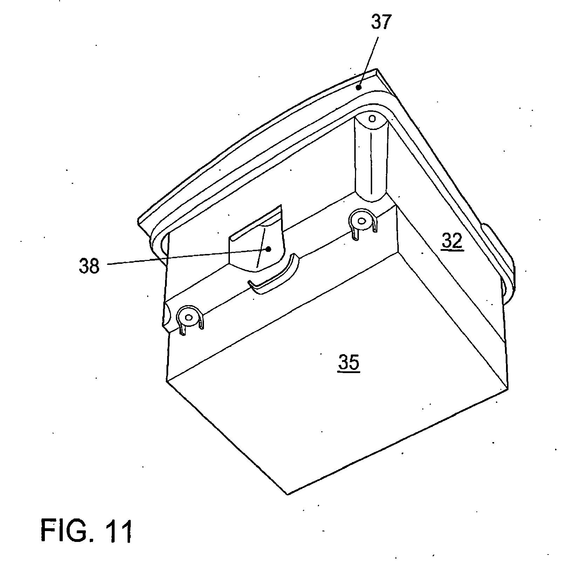

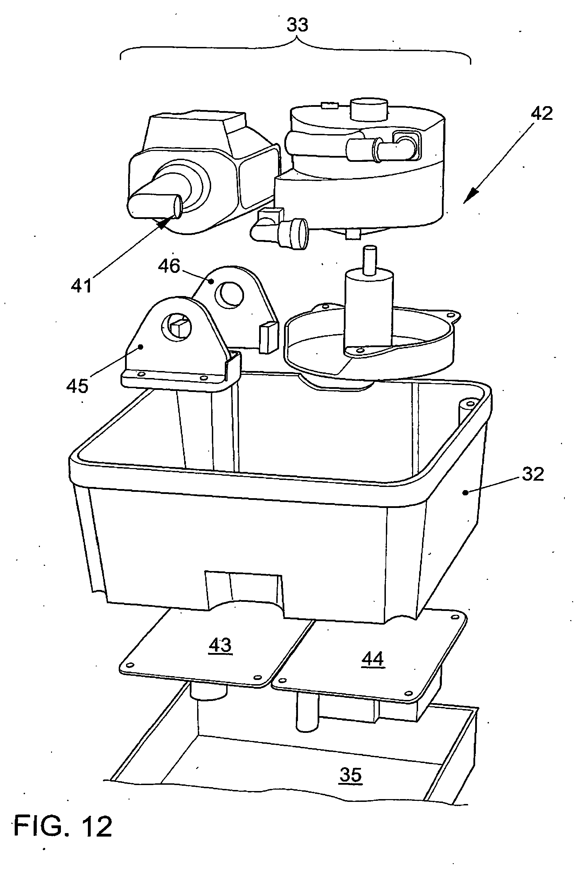

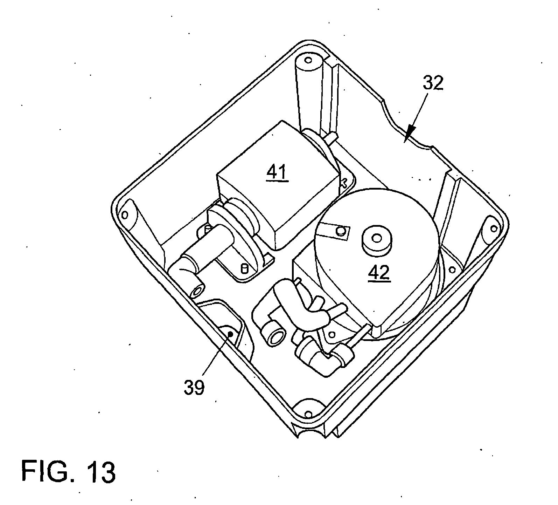

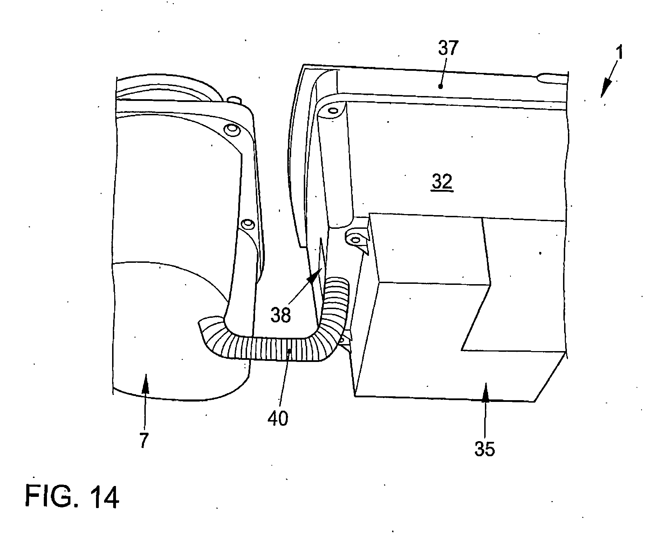

Die Montagebox 32 mit unterhalb angeordneter Zusatzbox 35 sowie Montagebox-Deckel 37 im zusammengebauten Zustand ist in der Fig. 10 in einer schematischen, perspektivischen Vorderansicht gezeigt. In der Fig. 11 dagegen ist der Zusammenbau der Fig. 10 in einer perspektivischen Unteransicht gezeigt, wobei hier gut eine Boxenöffnung 38 sichtbar ist, über die Systemleitungen aus der Montagebox 32 heraus zu dem Modul-Aufnahmegehäuse 7 geführt werden können, wo diese, wie dies insbesondere der Fig. 5 entnommen werden kann, über eine entsprechende Gehäuseöffnung. 39 in das Innere des Modul-Aufnahmegehäuses 7 zu den dort angeordneten entsprechenden Bauteilen des Wasserbehälters 28 bzw. des Wasserbehälter-Anschlussstutzens 29 bzw. zu der Zapfstelle 6 hin geführt werden können. In der Fig. 14 ist diese Verbindung lediglich schematisch und beispielhaft in einer perspektivischen Unteransicht gezeigt, wobei hier die Systemleitungen in einem flexiblen Schutzschlauch 40 geführt und aufgenommen sind. Wie dies insbesondere den Fig. 12 und 13 entnommen werden kann, umfasst die Heizeinrichtung 33 zum einen eine elektrische Pumpe 41 und zum anderen einen elektrisch beheizbaren Thermoblock 42 als Heizblock, mittels denen das über Verbindungsleitungen oder Verbindungskanäle aus dem Wasserspeicher mittels der elektrischen Pumpe 41 angesaugte Wasser auf eine vorgegebene Temperatur aufgeheizt und wiederum über entsprechende Verbindungsleitungen oder Verbindungskanäle mit einem vorgegebenen Druck an der Zapfstelle 6 zur Verfügung gestellt werden kann. Der Thermoblock ist bevorzugt mit einer Niederspannung von 12 Volt und einer Heizleistung von in etwa 180 Watt betrieben. Die elektronischen Bauteile der Heizeinrichtung 33, insbesondere Kabel und/oder Platinen 43, 44, sind in der Zusatzbox 35 aufgenommen, wobei die erforderlichen elektrischen Leitungen gegebenenfalls über eine Boxenwand hindurch in die Montagebox 32 geführt sind.

Die Ansteuerung der Heizeinrichtung 33 wird z. B. durch Betätigung einer Steuereinrichtung vorgenommen, die mittels z. B. der Bedienknöpfe 26, 27 ansteuerbar ist.

Wie dies der Fig. 12 weiter entnommen werden kann, wird die elektrische Pumpe bevorzugt über Pumpenlager 45, 46 im Innenraum der Montagebox 32 gelagert, um eine stabile und feste Anbindung der Pumpe zu gewährleisten.

Anstelle oder zusätzlich zum Montagebox-Deckel 37 kann, im verbauten Zustand der Montagebox 32 in der Mittelkonsole 2 des Fahrzeugs zudem eine vorzugsweise schwenkbare Mittelarmlehne 47 vorgesehen sein, die die Montagebox 32 im unmittelbaren Anschluss an die Sichtblende 5 überdeckt. Mit einer derartigen Ausgestaltung kann insbesondere durch Abheben der Mittelarmlehne 47 eine einfache Zugänglichkeit der Montagebox 32 und damit der Heizeinrichtung 33 gewährleistet werden, so dass, wie dies in den Fig. 1 und 2 lediglich schematisch dargestellt ist, nahezu das gesamte Heißwasserbereitungsmodul 1 vollkommen im Stauraum der Mittelkonsole 2 aufgenommen ist und lediglich die Zapfstelle 6 und der Behälterdeckel 30 vom Heißwasserbereitungsmodul 1 vom Fahrzeuginnenraum aus sichtbar und zugänglich sind, um durch Anschluss eines entsprechenden Zapfstellen-Anschlusselementes an der Zapfstelle 6 eine Wasser- bzw. Dampfcharge abziehen zu können. Die Zapfstelle 6 und der Behälterdeckel 30 befinden sich an einer Stelle, an der üblicherweise ohnehin Cupholder im Fahrzeug angeordnet sind, so dass das Heißwasserbereitungsmodul 1 ins Fahrzeug integriert werden kann, ohne dessen gewohnten Innenraumoptik zu verändern bzw. zu beeinträchtigen.

Bevorzugte Verwendungen des Heißwasserbereitungsmoduls 1 zur Kaffeebereitung bzw. zur Bereitstellung eines heißfeuchten Erfrischungstuches werden nachfolgend näher erläutert:

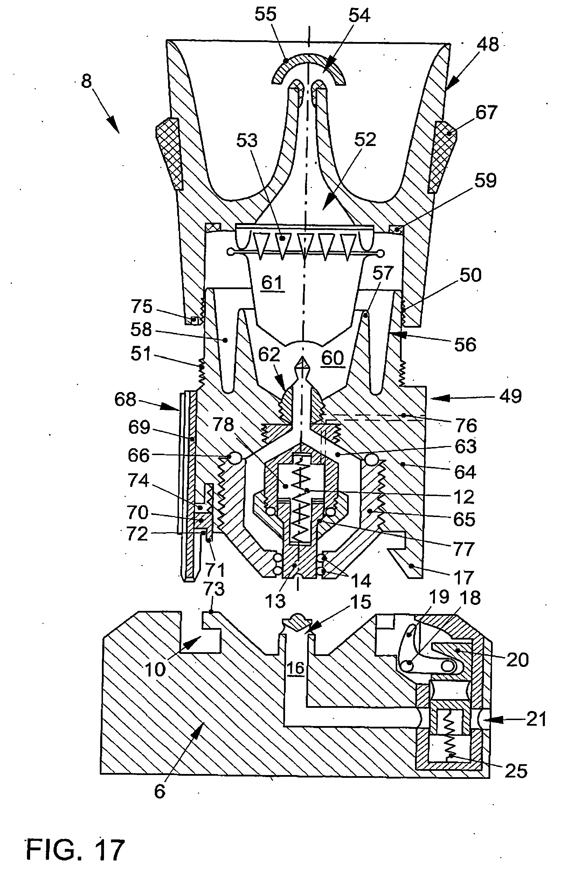

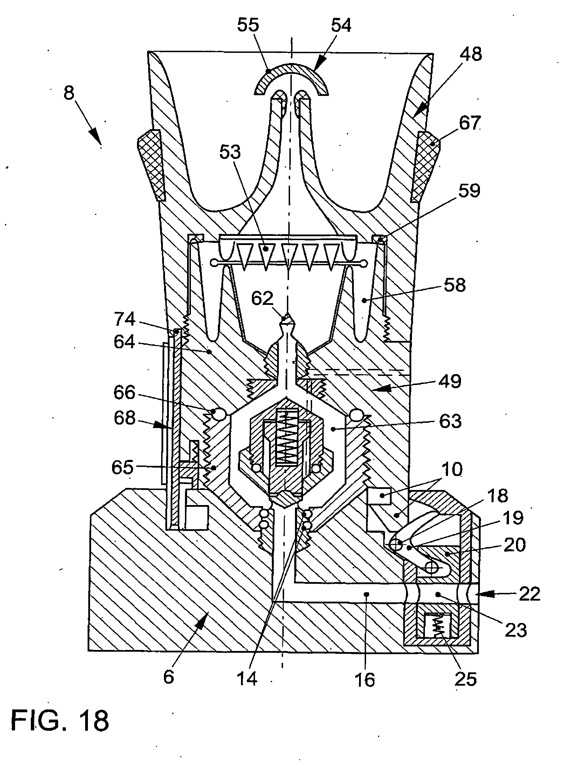

Die Fig. 17 und 18 zeigen schematisch und als Schnittdarstellung ein als Kaffeebecher 8 ausgebildetes Anschluss-Gegenelement, das in der Fig. 17 in einer auseinandergezogenen Darstellung und in der Fig. 18 im zusammengebauten, montierten und zudem mit der Zapfstelle 6 gekoppelten Zustand dargestellt ist.

Der Kaffeebecher 8 weist ein Trinkgefäß 48 auf, der mittels eines Extraktionskopfes 49 als Brüheinheit bzw. Brühkopf mittels einer lösbaren Schraubverbindung verbunden ist, wozu am Trinkgefäß 48 im Bereich einer Bodenwand desselben randseitig ein Vorsprung mit einem Innengewinde 50 ausgebildet ist, dem extraktionskopfseitig ein Vorsprung mit einem Außengewinde 51 zugeordnet ist, so dass der Extraktionskopf 49 in den Bodenwandbereich des Trinkgefäßes 48 eingeschraubt werden kann. Das Innengewinde 50 und das Außengewinde 51 mitsamt ihren Vorsprüngen, an denen dieses Gewinde ausgebildet sind, sind jeweils randseitig ringförmig angeordnet und ausgebildet, so dass an der Bodenwand des Trinkgefäßes 48 in einem mittleren, zentralen Bereich eine durch einen Einströmkanal 52 ausgebildete Einströmöffnung vorgesehen werden kann, der sich von der Bodenwand des Trinkgefäßes 48 ausgehend turm- bzw. rohrartig nach oben in den Gefäßinnenraum erstreckt, im hier gezeigten Beispielfall in etwa bis zur halben Höhe der Höhenerstreckung des Gefäßinnenraums erstreckt. Die Höhenerstreckung des Einströmkanals 52 ist hier bevorzugt so bemessen, dass diese in etwa einer vorgegebenen Füllstandshöhe eines Kaffeextraktes im Trinkgefäß 48 entspricht.

Der Einströmkanal 52 ist hier beispielhaft materialeinheitlich und einstückig mit der Bodenwand ausgebildet, z. B. aus einem Kunststoffmaterial. Grundsätzlich kann der Einströmkanal aber auch durch ein separates Bauteil ausgebildet sein, das mit der Bodenwand durch eine mechanische Verbindung verbunden ist, z. B. durch eine Einschraubverbindung.

Im Bereich unterhalb des Einströmkanals 52, dem Extraktionskopf 49 zugeordnet, ist ein Schneidgitter 53 angeordnet, dessen Funktion noch später näher erläutert wird.

Der Einströmkanal 52 ist im Gefäßinnenraum mittels eines in der Art eines Rückschlagventils ausgebildeten Absperrorgans 54 ausgebildet, das einen Kaffeeextrakt-Volumenstrom in das Trinkgefäß 48 erst bei Erreichen eines vorgegebenen Öffnungsdruckes freigibt und bei fehlendem oder zu niedrigem Öffnungsdruck das Ausströmen des Kaffeeextraktes aus dem Gefäßinnenraum verhindert. Konkret ist dieses Absperrorgan 54 am freien Ende des Einströmkanals 52 angeordnet und bildet gleichzeitig mit einem rohrförmigen, hier beispielhaft leicht konvex gekrümmten bzw. bombierten T-Querstück 55 ein Umlenkelement aus, welches den Volumenstrom des Kaffeeextraktes in Richtung Seiten- und Bodenwand des Trinkgefäßes 48 umlenkt. Beispielsweise ist das Absperrorgan 54 aus einem Elastomermaterial hergestellt, z. B. als eine Art Blähschlauch, der sich bei einem vorgegebenen Druck so aufbläht und ausdehnt, dass Einströmöffnungen freigegeben werden, während die Einströmöffnungen ohne diesen Druck aber verschlossen bleiben bzw. nicht ausgebildet werden.

Wie dies den Fig. 17 und 18 weiter entnommen werden kann, wird extraktionskopfseitig durch einen das Außengewinde 51 aufweisenden Aufnahmerandbereich 56 und einem sich daran nach innen hin anschließenden weiteren, sogenannten Portionsaufnahme-Wandbereich 57 ein Ringspalt 58 ausgebildet. Mit einem derartigen Ringspalt wird ein Aufnahmeraum zur Verfügung gestellt, in dem z. B. beim Lösen des Trinkgefäßes 48 vom Extraktionskopf 49 herabtropfendes Kaffeeextrakt sicher im Bereich des Extraktionskopfes aufgefangen werden kann, so dass ein Abtropfen auf den Boden bzw. in das Fahrzeug, falls dieses Lösen von Trinkgefäß 48 und Extraktionskopf 49 im Fahrzeuginnenraum erfolgen sollte, funktionssicher verhindert werden kann.

Wie dies den Fig. 17 und 18 weiter entnommen werden kann, stützt sich das freie Ende des Aufnahmerandbereichs 56 im verbundenen Zustand zwischen Trinkgefäß 48 und Extraktionskopf 49 an dem bodenwandseitig am Trinkgefäß 48 angeordneten Dichtelement 59 ab.

Der trinkgefäßseitige Bodenwandbereich mitsamt Schneidgitter 53 und Einströmkanal 52 ist einer Stirnseite des Extraktionskopfes 49 zugeordnet, in der insbesondere durch den ringförmigen Portionsaufnahme-Randbereich 57 eine Kaffeeportionsaufnahme 60 vorgesehen ist, in die eine Kaffeeportionskapsel 61 formschlüssig eingesetzt werden kann.

Beim Einsetzen der Kaffeeportionskapsel 61 in die Kaffeeportionsaufnahme 60 wird eine Kapselunterseite durch einen in die Kaffeeportionsaufnahme 60 einragenden Dornfortsatz 62, der nachfolgend noch näher beschrieben wird, perforiert. Gleichzeitig wird im verbundenen Zustand des Trinkgefäßes 48 mit dem Extraktionskopf 49, d. h. im verschraubten Zustand dieser beiden Bauteile das Schneidgitter 53 in die Kapseloberseite eingedrückt, wodurch diese perforiert wird.

Der die Kaffeeportionskapsel 61 perforierende Dornfortsatz 62 der Kaffeeportionsaufnahme 60 ist kanal- bzw. rohrförmig ausgebildet und steht mit einem extraktionskopfseitigen Wasserkanal 63 als Einströmkanal in Strömungsverbindung. Der Dornfortsatz 62 kann dabei ein separates. Bauteil sein, das mittels einer Gewindeschraubverbindung in den Extraktionskopf eingeschraubt wird.

Wie dies der Fig. 17 und 18 weiter schematisch entnommen werden kann, ist der Extraktionskopf 49 als Aufnahmegegenelement zweiteilig aus einem ersten, dem Trinkgefäß 48 zugeordneten Kopfteil 64, in dem die Kaffeeportionsaufnahme 60 ausgebildet ist, und aus einem zweiten, der Zapfstelle 6 zugeordneten Kopfteil 65 ausgebildet. Das zweite Kopfteil 65 weist ein Außengewinde auf, dem am ersten Kopfteil 64 ein Innengewinde zugeordnet ist, so dass das zweite Kopfteil 65 mit seinem Außengewinde in das Innengewinde des ersten Kopfteils 64 einschraubbar ist, und zwar unter Zwischenschaltung einer den Wasserkanalbereich umgebenden Ringdichtung 66. Selbstverständlich kann hier, ebenso wie zwischen dem Trinkgefäß 48 und dem Extraktionskopf 49 die Gewindeanordnung zwischen den Bauteilen auch vertauscht sein, also z. B. als Außengewinde am ersten Kopfteil ausgebildet sein.

In dem zweiten Kopfteil 65 ist im Wesentlichen mittig und zentral ein federbelastetes Absperrorgan 13 ausgebildet, das ebenso wie die Zapfstelle 6 analog zu dem zuvor in Verbindung mit den Figuren 15 und 16 geschilderten Ausgestaltungen des dortigen Anschlussgegenelementes 9 und der dortigen Zapfstelle 6 ausgebildet ist, so dass bezüglich der weiteren Funktionsweise hier auf die dortigen Ausführungen verwiesen wird, insbesondere in Verbindung mit der Fig. 17 und der Fig. 18 auch die dortigen Bezugszeichen verwendet werden.

Im Unterschied zur Ausgestaltung nach den Fig. 15 und 16 ist bei der Ausgestaltung des Kaffeebechers 8 gemäß den Fig. 17 und 18, der das Aufnahmegegenelement ausbildende Extraktionskopf 49 somit zweiteilig ausgebildet, was jedoch lediglich herstellungs- und montagetechnische Gründe hat, jedoch keinerlei weitere Auswirkung auf die Funktionalität als Anschlussgegenelement bzw. Extraktionskopf 49.

Wie dies der Fig. 17 und auch der Fig. 18 weiter zu entnehmen ist, weist das Trinkgefäß 48 einen umlaufenden Griffring 67 auf, der wenigstens teilweise aus einem wärmeisolierenden Material hergestellt ist. Dieser Griffring 67 kann durch ein separates, mit dem Trinkgefäß, z. B. über eine Klebe- und/oder Nutverbindung verbindbares Bauteil gebildet sein. Ebenso ist jedoch auch die Anordnung eines herkömmlichen Henkels oder Griffs möglich.

Wie dies den Fig. 17 und 18 weiter zu entnehmen ist, ist hier beispielhaft am ersten Kopfteil 64 eine die lösbare Verbindung zwischen Trinkgefäß 48 und Extraktionskopf 49 verriegelnde Verriegelungseinrichtung 68 vorgesehen, die durch eine am ersten Kopfteil verlagerbare Verriegelungsstange 69 gebildet ist, die im nicht mit der Zapfstelle 6 verbundenen Zustand des Extraktionskopfes 49 mittels eines Federelementes 70 in die in der Fig. 17 dargestellte Entriegelungsposition gedrängt wird, bei der ein mit der Verriegelungsstange 69 verbundener Anschlag 71 über einen Bodenwandbereich 72 des ersten Kopfteils 64 vorsteht. Diesem Anschlag 71 bzw. diesem Bodenwandbereich 72 ist zapfstellenseitig ein Gegenanschlag 73 zugeordnet, der hier gleichzeitig integraler Bestandteil des Bajonett-Verschlusses 10 ist. Wird nun, wie dies in der Fig. 18 dargestellt ist, im verbundenen Zustand von Trinkgefäß 48 und Extraktionskopf 49 der so ausgebildete Kaffeebecher 8 in die Zapfstelle 6 eingesetzt, drückt der zapfstellenseitige Gegenanschlag 73 den Anschlag 71 gegen die Kraft des Federelementes 70 nach oben, wobei für diese Verlagerung im Bereich des ersten Kopfteils 65 ein Verlagerungsspalt 74 bzw. Verlagerungsfreiraum ausgebildet ist. Durch diese Verlagerung des Anschlags 71 wird gleichzeitig die Verriegelungsstange 69 in der Bildebene der Fig. 17 und 18 nach oben verlagert, wodurch das freie obere Ende der Verriegelungsstange 69 in Eingriff mit einer trinkgefäßseitig ausgebildeten Aufnahme 75 gelangt und damit die lösbare Verbindung zwischen Trinkgefäß 48 und Extraktionskopf 49 blockiert ist. Damit ist auf einfache Weise sichergestellt, dass nach der Kaffeebereitung beim Herausdrehen des Kaffeebechers 8 kein unbeabsichtigtes Lösen des Trinkgefäßes 48 vom Extraktionskopf 49 erfolgt. Dies ist erst dann möglich, wenn die Abkopplung von der Zapfstelle 6 stattgefunden hat und das Federelement 70 den Anschlag 71 mitsamt Verriegelungsstange 69 wieder in die in der Fig. 17 gezeigte Position drängt.

Um nach dieser Abkopplung des Kaffeebechers 8 von der Zapfstelle 6 sicherzustellen, dass vom Kaffeebecher 8 kein heißes Wasser abtropft, soll das Absperrorgan bzw. Absperrmittel 13 von der Feder 12 sehr schnell in die in der Fig. 17 gezeigte Schließstellung gedrängt werden. Um diesen Vorgang des Verschließens und Abdichtens des Extraktionskopfes 49 schnell und funktionssicher durchführen zu können, sind extraktionskopfseitig Entlüftungsbohrungen 76, 77 vorgesehen, die vermeiden, dass es zum Aufbau eines Unterdrucks im Bereich des Absperrmittels 13 kommt, der dann das schnelle Zurückstellen des Absperrorgans 13 in die Schließ- und Dichtstellung verhindert. Um die Entlüftung sicherzustellen, ist ein das Absperrmittel 13 aufnehmender Kolbenraum 78 bezogen auf die Bildebene der Fig. 17 und 18 jeweils unten und oben mit einem der Entlüftungskanäle 76, 77 gekoppelt und über den Extraktionskopf 49 nach außen geführt, damit je nach Stellung des Absperrmittels 13 sowohl der darüber als auch darunterliegende Teilraum des Kolbenraums 78 jeweils belüftet und mit Umgebungsdruck beaufschlagt werden kann.

Sowohl die Verriegelung mittels der Verriegelungseinrichtung 68 als auch die Entlüftung ist, wie zuvor dargestellt, lediglich optional und braucht nicht zwingend vorgesehen sein.

Im vorliegenden Fall eines Kaffeebechers 8 als Zapfstellen-Anschlusselement, gelangt nunmehr bei einer Betätigung des Heißwasseraufbereitungsmoduls 1, z. B. über den Bedienknopf 26 als Einschalter und die damit erfolgende Aktivierung der Heizeinrichtung 33 eine vorgegebene Menge an Heißwasser über den zapfstellenseitigen Zapfstellen-Strömungskanal 16 und den Wasserkanal 63 im Extraktionskopf 49 sowie über den Dornfortsatz 62 in die Kaffeeportionskapsel. Das Heißwasser extrahiert dort alle Aromen und Geschmacksnoten der Kaffeemischung, die durch ein Kaffeepulver gebildet ist, wobei das Heißwasser dann die Kaffeeportionskapsel als Kaffeeextrakt verlässt und in das Trinkgefäß 48 des Kaffeebechers 8 in der zuvor beschriebenen Weise einströmt.

Nach dem Einströmvorgang kann dann der Kaffeebecher 8, d. h. die Baueinheit aus Trinkgefäß 48 und Extraktionskopf 49 durch schnelles und einfaches Lösen des Bajonett-Verschlusses 10 aus der Zapfstelle 6 entnommen werden.

Nachfolgend wird nunmehr eine weitere besonders bevorzugte Ausgestaltung der vorliegenden Erfindungsidee näher erläutert, bei der das Zapfstellen-Anschlusselement als ein sogenanntes Hot-Towel-Aufnahmebehältnis ausgebildet ist:

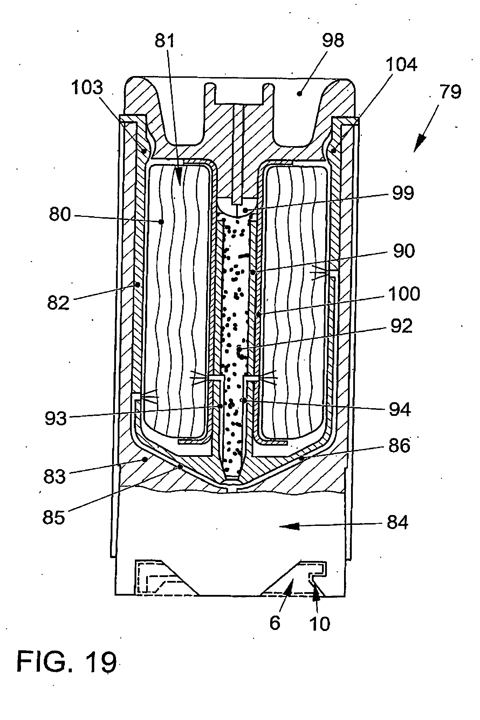

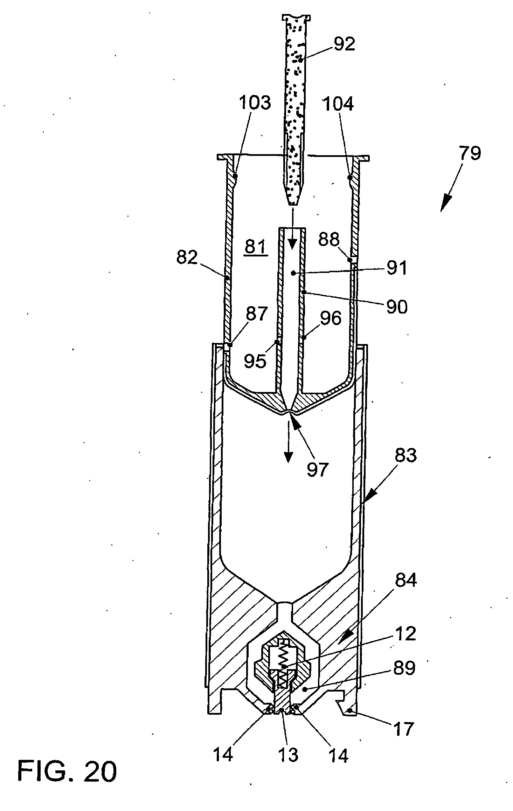

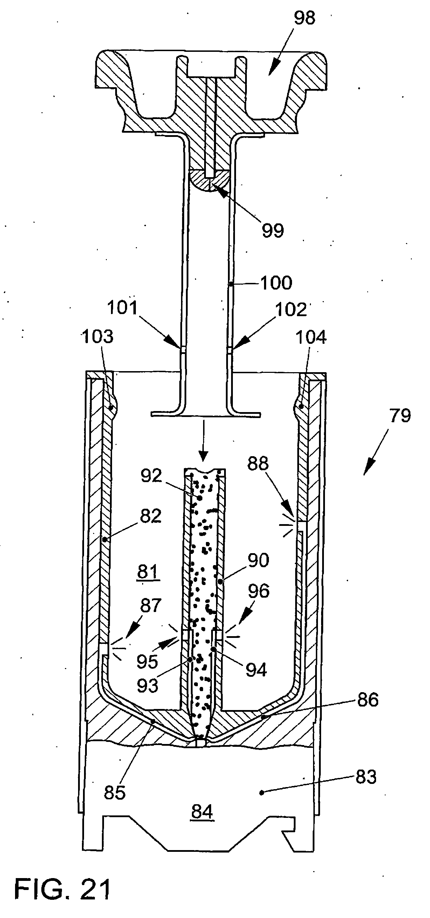

Das Hot-Towel-Aufnahmebehältnis 79 ist in der Fig. 19 schematisch und beispielhaft in einer Schnittdarstellung im zusammengebauten Zustand mit eingesetztem Handtuch 80 dargestellt. Nachfolgend wird der genaue Aufbau dieses Hot-Towel-Aufnahmebehältnisses beispielhaft vor allem anhand der Fig. 20 und 21 näher erläutert. So umfasst das Hot-Towel-Aufnahmebehältnis 79 ein einen Hot-Towel-Aufnahmeraum 81 ausbildendes, schalenartiges Einsatzteil 82, das, wie dies insbesondere aus der Fig. 20 ersichtlich ist, formschlüssig in den Grundkörper 83 des Hot-Towel-Aufnahmebehältnisses 79 eingesetzt werden kann. Dieses Einsatzteil 82 weist am dem ein Anschlussgegenelement ausbildenden Bodenbereich 84 des Grundkörpers 83 zugewandten unteren Einsatzteil-Ende diverse voneinander beabstandete und sich über eine vorgegebene Richtung über eine vorgegebene Länge entlang der Einsatzteil-Außenwand erstreckende Bohrungen bzw. kanal- oder nutförmige Ausnehmungen auf, die im formschlüssig eingesetzten Zustand des Einsatzteils 82 dann zwischen eben dem Einsatzteil 82 und dem Grundkörper 83 eine Mehrzahl von voneinander beabstandeten und sich entlang eines vorgegebenen Umfangsbereiches bzw. über eine vorgegebene geodätische Höhe erstreckende Düsenkanäle 85, 86 ausbildet, von denen hier, darstellungstechnisch bedingt, lediglich zwei dargestellt sind.

Diese Düsenkanäle 85, 86 münden mit Düsen 87, 88 wiederum in den Hot-Towel-Aufnahmeraum 81. Wie dies insbesondere dem zusammengebauten Zustand der Fig. 19 entnommen werden kann, münden die Düsenkanäle 85, 86 ferner mit ihren den Düsen 87, 88 gegenüberliegenden Kanalenden in einem Einströmkanal 89, der in dem das Aufnahmegegenelement ausbildenden Bodenbereich 84 des Hot-Towel-Aufnahmebehältnisses 79 bzw. des Grundkörpers 83 ausgebildet ist, und über den, wie dies nachfolgend noch näher erläutert wird, Wasser von einer Zapfstelle in das Hot-Towel-Aufnahmebehältnis 79 einströmt.

Wie dies nunmehr wiederum insbesondere der Fig. 20 entnommen werden kann, weist das Einsatzteil 82 einen integral damit ausgebildeten Aufnahmeraumdorn 90 auf, der sich vom Bodenbereich des Einsatzteils 82 ausgehend nach oben in den Hot-Towel-Aufnahmeraum 81 hinein erstreckt. In den Hohlraum 91 des Aufnahmeraumdorns 90 kann ein Dorneinsatz 92 dergestalt formschlüssig eingesteckt werden, dass durch entsprechendes Vorsehen von Bohrungen bzw. kanal- oder nutförmigen Ausnehmungen an der Dorneinsatz-Außenseite, zwischen dem Dorneinsatz 92 und dem Aufnahmeraumdorn 90 mehrere sich entlang eines vorgegebenen Umfangbereiches und sich über eine vorgegebene geodätische Höhe erstreckende Düsenkanäle 93, 94 ausgebildet werden. Diese Düsenkanäle 93, 94, die hier unterschiedliche geodätische Höhen aufweisen, münden einerseits über die Düsen 95, 96 in den Hot-Towel-Aufnahmeraum 81 sowie andererseits im Bereich einer mit dem Einströmkanal 89 in Strömungsverbindung stehenden Einlassöffnung 97 des Einsatzteils. Auch hier können wiederum mehr als zwei Düsenkanäle 93, 94 ausgebildet sein.

Wie dies nunmehr insbesondere aus der Fig. 21 ersichtlich ist, die den Grundkörper 83, das Einsatzteil 82 und den Dorneinsatz 92 im montierten Zustand zeigt, wird ferner auf das Hot-Towel-Aufnahmebehältnis 79 ein Deckel 98 aufgesetzt, an dessen Deckelunterseite ein Deckelfortsatz 99 ausgebildet ist, der mit dem Deckel 98 integral ausgebildet sein kann, der aber auch als separates Bauteil mit dem Deckel 98 fest verbunden sein kann. Dieser Deckelfortsatz 99, der z. B. aus einem Elastomermaterial hergestellt ist, und zwar zumindest an seinem freien Ende, wirkt im in der Fig. 19 gezeigten montierten Zustand mit dem Dorneinsatz 92 zusammen und stützt sich an diesem in einer Anlageverbindung ab bzw. hält diesen in seiner Position.

Weiter weist der Deckel 98 an seiner Unterseite eine Steckhülse 100 auf, die ebenfalls wiederum integral mit dem Deckel 98 ausgebildet sein kann oder aber auch durch ein separates Bauteil gebildet sein kann, das mit dem Deckel 98 verbunden werden kann. Diese Steckhülse 100 wird im montierten Zustand über den Aufnahmeraumdorn 90 gesteckt und nimmt diesen formschlüssig dergestalt in sich auf, dass die aufnahmeraumdornseitigen Düsen 95, 96 mit steckhülsenseitigen Düsen 101 und 102 fluchten. Wie zuvor geschildert, ist dies hier lediglich beispielhaft in Verbindung mit zwei Düsen gezeigt. Selbstverständlich kann auch eine andere Anzahl von Düsen vorgegeben sein. Ferner können die Düsen wenigstens zum Teil auch auf geodätisch unterschiedlichen Höhen liegen.

Um bei der Montage des Deckels 98 eine korrekte Deckelpositionierung dahingehend zu erzielen, dass die aufnahmeraumdornseitigen Düsen 95, 96 mit den steckhülsenseitigen Düsen 101, 102 fluchten, kann z. B. zwischen Deckel 98 Einsatzteil 82 eine hier beispielhaft durch zwei Rastnasen 103, 104 gebildete Positionierhilfe vorgesehen sein.

Auf die Steckhülse 100 kann dann z. B. ein Erfrischungstuch bzw. Handtuch 80 aufgewickelt werden und in Verbindung mit der Deckelmontage in den Hot-Towel-Aufnahmeraum 81 eingebracht werden, wie dies schematisch in der Fig. 19 dargestellt ist. Bevorzugt weist hierzu der Hot-Towel-Aufnahmeraum 81 eine längliche, zylindrische Innengeometrie auf, so dass das Handtuch 80 im gerollten Zustand im Wesentlichen formschlüssig im Hot-Towel-Aufnahmeraum 81 aufgenommen ist.

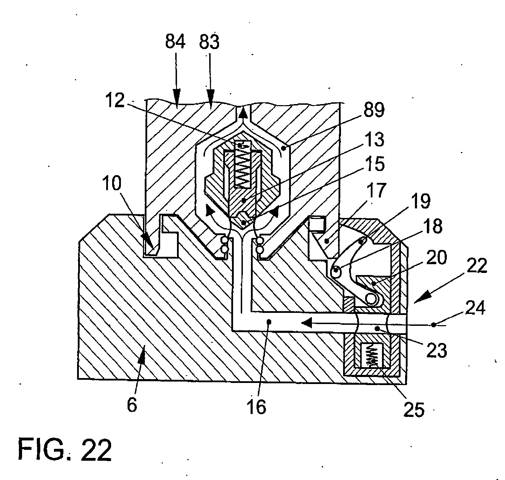

Wird nun das in der Fig. 19 gezeigte Hot-Towel-Aufnahmebehältnis 79 an eine in der Fig. 19 lediglich äußerst schematisch und beispielhaft strichliert dargestellte Zapfstelle 6 angekuppelt, so wird, wie dies aus der Zusammenschau der Fig. 20 und 22 hervorgeht, ein im Bodenbereich 84 als Aufnahmegegenelement des Hot-Towel-Aufnahmebehältnisses 79 angeordnetes Absperrmittel 13 von einem Zapfstutzen 15 gegen die Kraft einer Feder 12, die das Absperrmittel 13 im nicht mit der Zapfstelle 6 verbundenen Zustand, wie er schematisch in der Fig. 20 dargestellt ist, in eine den Einströmkanal 89 verschließende Position zwängt, in die in der Fig. 22 gezeigte Freigabestellung verlagert. In dieser ist die Strömungsverbindung zwischen einem zapfstellenseitigen Strömungskanal 16 und dem Einströmkanal 89 hergestellt, so dass z. B. Heißwasser oder Heißdampf über den Einströmkanal 89 und die Düsenkanäle 85, 86, 93, 94 in den Hot-Towel-Aufnahmeraum 81 einströmen und dort das Handtuch 80 entsprechend mit Heißwasser oder Heißdampf beaufschlagen kann.

Um wiederum die Strömungsverbindung zum zapfstellenseitigen Strömungskanal 16 freizugeben, wird auch hier wieder mittels des Verriegelungshakens 17 des Bajonett-Verschlusses 10 der Sicherheitsbolzen 20 betätigt, wie dies bereits zuvor in Verbindung mit der Fig. 15 und 16 ausführlich und im Detail erläutert worden ist. Insofern wird hier für das Hot-Towel-Aufnahmebehältnis 79 explizit auf die zuvor gemachten Ausführungen verwiesen, was insbesondere auch für die Ausführungen in Verbindung mit den Fig. 17 und 18 gilt.

Nach der Beaufschlagung des Handtuchs 80 mit Heißdampf oder Heißwasser kann dann der Deckel 98 abgenommen werden und das Handtuch 80 zur Erfrischung verwendet oder gereicht werden.

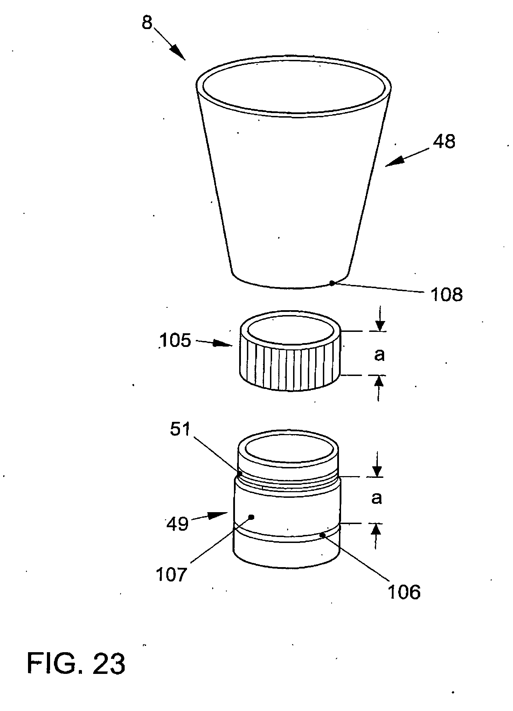

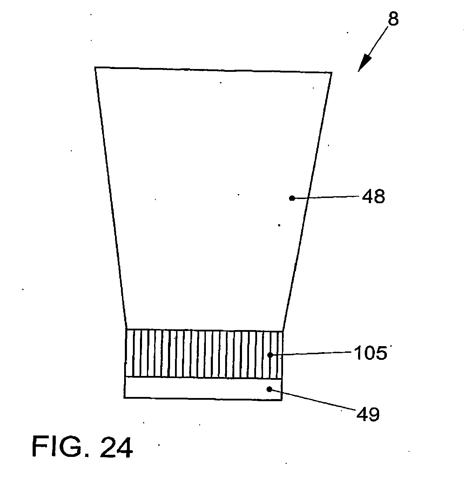

In den Fig. 23 und 24 ist schematisch nochmals der Kaffeebecher 8 gezeigt, der mit einem als Aufsteckhülse 105 versehenen Dekorelement versehen ist. Das Trinkgefäß 48 und der Extraktionskopf 49 sind hier lediglich schematisch dargestellt und konkret entsprechend der zuvor gezeigten Ausgestaltung ausgebildet.

Wie dies insbesondere der Fig. 23 entnommen werden kann, weist der Extraktionskopf 49 an seinem unteren Ende einen Ringbund 106 auf, auf dem sich die Aufsteckhülse 105, wie dies in der Fig. 24 dargestellt ist, im aufgesteckten Zustand abstützt.

Weiter weist der Extraktionskopf 49 einen Aufsteckbereich 107 auf, der sich vom Ringbund 106 ausgehend um die Höhe a nach oben erstreckt, bis zu dem Bereich, wo das Außengewinde 51 beginnt. Die Aufsteckhülse 105 weist ebenfalls eine Höhenerstreckung von in etwa a auf, wobei die Aufsteckhülse 105 im aufgesteckten Zustand den Aufsteckbereich 107 des Extraktionskopfes 49 im Wesentlichen formschlüssig umschließt, gegebenenfalls auch in Verbindung mit einem Klemmschluss.

Nach dem Aufstecken der Aufsteckhülse 105 wird das Trinkgefäß 48 mit seinem hier nicht ersichtlichen Innengewinde auf das Außengewinde 51 des Extraktionskopfes 49 aufgeschraubt, so dass der Kaffeebecher 8 fertig montiert ist. In diesem Zusammenhang sei darauf hingewiesen, dass das Trinkgefäß 48 selbst auch bodenseitig einen umlaufenden Ringbund 108 aufweist, mittels dem sich das Trinkgefäß im in der Fig. 24 gezeigten montierten Zustand außenbündig an die ein Dekorelement ausgebildende Aufsteckhülse 105 anschließen kann. Alternativ oder zusätzlich zu dem eben beschriebenen Ausführungsbeispiel kann hier auch vorgesehen sein, dass die Aufsteckhülse 105 eine geringfügig, z. B. um 1 mm oder dergleichen größere Höhenerstreckung aufweist als dies durch das Maß a vorgegeben ist, so dass die Aufsteckhülse 105 im in der Fig. 24 gezeigten, aufgeschraubten Zustand des Trinkgefäßes 48 auf den Extraktionskopf zwischen den beiden Ringbunden 106, 108 verklemmt ist.

Die Aufsteckhülse 105 kann dabei an einer Sichtseite unterschiedlich gestaltet sein, z. B. entsprechend den Dekoreinlagen eines Innenraumdesigns eines Fahrzeuges gestaltet sein, so z. B. gemäß einer Holzausführung oder einer Aluminiumausführung, um nur einige zu nennen. Besonders bevorzugt ist ein mit der Sichtblende 5 harmonisierendes Design, z. B. eine bezüglich des Designs identische Ausgestaltung.

Selbstverständlich kann auch das Trinkgefäß 48 selbst an seiner Außenseite zusätzlich oder alternativ mit einem entsprechenden Dekorelement versehen sein, z. B. an seiner Außenseite eine Sichtseite aufweisen, die z. B. an ein wiederkehrendes Designelement eines Innenraumdesigns, z. B. einer Dekoreinlage, angepasst ist.

Das eben Ausgeführte gilt selbstverständlich auch analog für den Einsatz eines Dekorelementes in Verbindung mit einem Hot-Towel-Aufnahmebehältnis, wozu dieses gegebenenfalls mehrteilig ausgebildet ist bzw. an der Außenseite entsprechende Dekorelement-Aufnahme- bzw. Aufsteckbereiche für ein formschlüssiges Aufstecken ausgebildet sind.

### Bezugszeichenliste

- 1: Heißwasserbereitungsmodul
- 2: Mittelkonsole
- 3: Fahrersitz
- 4: Beifahrersitz
- 5: Sichtblende
- 6: Zapfstelle
- 7: Modul-Aufnahmegehäuse
- 8: Kaffeebecher
- 9: Anschlussgegenelement
- 10: Bajonett-Verschlussverbindung
- 11: Einströmkanal
- 12: Feder
- 13: Absperrventil
- 14: Dichtelement
- 15: Zapfstutzen
- 16: Ventilelement-Strömungskanal
- 17: Verriegelungshaken
- 18: Schwenkachse
- 19: Sicherheitshebel
- 20: Sicherheitsbolzen
- 21: Verschlussposition
- 22: Freigabeposition
- 23: Durchströmöffnung
- 24: Pfeil
- 25: Feder
- 26: Bedienknopf
- 27: Bedienknopf
- 28: Wasserbehälter
- 29: Wasserbehälter-Anschlussstutzen
- 30: Behälterdeckel
- 31: Cupholder-Funktion
- 32: Montagebox
- 33: Heizeinrichtung
- 34: Zusatzbox
- 35: Zusatzbox
- 36: Montagebox-Deckel
- 37: Montagebox-Deckel
- 38: Boxenöffnung
- 39: Gehäuseöffnung
- 40: Schutzschlauch
- 41: elektrische Pumpe
- 42: Thermoblock
- 43: Platine
- 44: Platine
- 45: Pumpenlager
- 46: Pumpenlager
- 47: Mittelarmlehne
- 48: Trinkgefäß
- 49: Extraktionskopf
- 50: Innengewinde
- 51: Außengewinde
- 52: Einströmkanal
- 53: Schneidgitter
- 54: Absperrorgan
- 55: T-Querstück
- 56: Aufnahmerandbereich
- 57: Positionsaufnahme-Wandbereiche
- 58: Ringspalt
- 59: Dichtelement
- 60: Kaffeeportionsaufnahme
- 61: Kaffeeportionskapsel
- 62: Dornfortsatz
- 63: Wasserkanal
- 64: erstes Kopfteil
- 65: zweites Kopfteil
- 66: Ringdichtung
- 67: Griffring
- 68: Verriegelungseinrichtung
- 69: Verriegelungsstange
- 70: Federelement
- 71: Anschlag
- 72: Bodenwandbereich
- 73: Gegenanschlag
- 74: Verlagerungsspalt
- 75: Aufnahme
- 76: Entlüftungsbohrung
- 77: Entlüftungsbohrung
- 78: Kolbenraum
- 79: Hot-Towel-Aufnahmebehälter
- 80: Handtuch
- 81: Hot-Towel-Aufnahmeraum
- 82: Einsatzteil
- 83: Grundkörper
- 84: Bodenbereich
- 85: Düsenkanal
- 86: Düsenkanal
- 87: Düse
- 88: Düse
- 89: Einströmkanal
- 90: Aufnahmeraumdorn
- 91: Hohlraum
- 92: Dorneinsatz
- 93: Düsenkanal
- 94: Düsenkanal
- 95: Düse
- 96: Düse
- 97: Einlassöffnung
- 98: Deckel
- 99: Deckelfortsatz
- 100: Steckhülse
- 101: Düse
- 102: Düse
- 103: Rastnase
- 104: Rastnase
- 105: Aufsteckhülse
- 106: Ringbund
- 107: Aufsteckbereich
- 108: Ringbund

## Patentansprüche

1. Anordnung einer Vorrichtung zur Heißwasser- oder Dampferzeugung in einem einen Wandbereich aufweisenden Fahrzeug oder Gebäudeinnenraum, bei der die Vorrichtung zur Heißwasser- oder Dampferzeugung wenigstens einen Wasserspeicher sowie wenigstens eine Heizeinrichtung aufweist, mittels der Wasser auf eine vorgegebene Temperatur aufheizbar ist, wobei die Vorrichtung weiter wenigstens eine in der Art einer Anschlusskupplung oder einer Dampf- oder Wassersteckdose ausgebildete Zapfstelle (6) für ein chargenweises Abzapfen von Wasser oder Dampf aufweist, die mit einem Zapfstellen-Anschlusselement (8; 79) koppelbar oder verbindbar ist, und wobei die wenigstens eine Zapfstelle (6) in einem Wandbereich des Fahrzeugs oder des Gebäudeinnenraums mündet, **dadurch gekennzeichnet, dass** die Zapfstelle (6) durch eine Art Ventilelement gebildet ist oder ein solches umfasst, wobei das Ventilelement bei einer Ventilbetätigung mittels Ankoppeln eines Zapfstellen-Anschlusselementes den Strömungsweg für Wasser oder Dampf freigibt.

2. Anordnung nach Anspruch 1, **dadurch gekennzeichnet, dass** die Zapfstelle (6) in einer Bestandteil des Wandbereichs bildenden oder als separates Bauteil mit dem Wandbereich verbindbaren Blende (5) oder Konsole mündet.

3. Anordnung nach Anspruch 1 oder 2, **dadurch gekennzeichnet, dass** die wenigstens eine Zapfstelle (6) an einem fahrzeugseitigen Innenraumwandbereich angeordnet ist.

4. Anordnung nach einem der Ansprüche 1 bis 3, **dadurch gekennzeichnet, dass** die wenigstens eine Zapfstelle (6) am Wandbereich im Wesentlichen oberflächenbündig mündet.

5. Anordnung nach einem der Ansprüche 1 bis 4, **dadurch gekennzeichnet, dass** die wenigstens eine Zapfstelle (6) Bestandteil eines Heißwasserbereitungsmoduls (1) ist.

6. Anordnung nach einem der Ansprüche 1 bis 5, **dadurch gekennzeichnet, dass** eine Zapfstelle (6) für Heißwasser oder Dampf mit einem Hot-Towel-Aufnahmebehältnis (79) als Zapfstellen-Anschlusselement koppelbar ist, in dessen Aufnahmeraum (81) ein Erfrischungstuch oder Handtuch (80) zur Beaufschlagung mit Heißwasser oder Dampf vorgegebener Temperatur aufgenommen ist.

7. Anordnung nach einem der Ansprüche 1 bis 5, **dadurch gekennzeichnet, dass** das Zapfstellen-Anschlusselement ein Trinkgefäß (8) ist.

## Claims

1. Arrangement of a device for generating hot water or steam in a vehicle or building interior having a wall region, in which arrangement the device for generating hot water or steam has at least one water accumulator and at least one heater, by means of which water can be heated to a stipulated temperature, the device having, further, at least one tapping point (6), designed in the manner of a connecting coupling or steam or water plug socket, for the batchwise tapping of water or steam, which tapping point is couplable or connectable to a tapping-point connecting element (8; 79), and at least one tapping point (6) issuing in a wall region of the vehicle or of the building interior, **characterized in that** the tapping point (6) is formed by a type of valve element or comprises such, the valve element releasing the flow path for water or steam upon valve actuation by means of the coupling of a tapping-point connecting element.

2. Arrangement according to Claim 1, **characterized in that** the tapping point (6) issues in a cover (5) or console forming an integral part of the wall region or connectable as a separate component to the wall region.

3. Arrangement according to Claim 1 or 2, **characterized in that** the at least one tapping point (6) is arranged on a vehicle-side interior wall region.

4. Arrangement according to one of Claims 1 to 3, **characterized in that** the at least one tapping point (6) on the wall region issues essentially flush with the surface.

5. Arrangement according to one of Claims 1 to 4, **characterized in that** the at least one tapping point (6) is an integral part of a hot-water preparation module (1).

6. Arrangement according to one of Claims 1 to 5, **characterized in that** a tapping point (6) for hot water or steam is couplable to a hot-towel reception container (79) as a tapping-point connecting element, the reception space (81) of which receives a refreshing tissue or hand towel (80) to be acted upon with hot water or steam of a stipulated temperature.

7. Arrangement according to one of Claims 1 to 5, **characterized in that** the tapping-point connecting element is a drinking vessel (8).

## Revendications

1. Agencement d'un dispositif de production d'eau chaude ou de vapeur dans un véhicule ou un espace intérieur de bâtiment comprenant une zone de paroi, ledit dispositif de production d'eau chaude ou de vapeur comportant au moins un accumulateur d'eau ainsi qu'au moins un dispositif de chauffage à l'aide duquel l'eau est chauffée à une température prédéfinie, le dispositif comportant en sus au moins une pompe (6) réalisée sous la forme d'un couplage de raccordement ou d'une prise de vapeur ou d'eau pour un tirage d'eau ou de vapeur à la demande qui peut être reliée ou couplée à un élément de raccord de pompe (8 ; 79) et l'au moins une pompe (6) débouchant dans une zone de paroi du véhicule ou de l'espace intérieur de bâtiment, **caractérisé en ce que** la pompe (6) est formée par une sorte d'élément de soupape ou comprend un tel élément, l'élément de soupape libérant, en présence d'un actionnement de soupape par couplage d'un élément de raccord de pompe, la voie d'écoulement d'eau ou de vapeur.

2. Agencement selon la revendication 1, **caractérisé en ce que** la pompe (6) débouche dans un écran (5) ou une console formés dans un composant de la zone de paroi ou pouvant être reliés à la zone de paroi sous la forme d'un composant séparé.

3. Agencement selon la revendication 1 ou 2, **caractérisé en ce que** l'au moins une pompe (6) est disposée au niveau d'une zone de paroi d'habitacle située du côté du véhicule.

4. Agencement selon l'une quelconque des revendications 1 à 3, **caractérisé en ce que** l'au moins une pompe (6) débouche pour l'essentiel en affleurement de surface au niveau de la zone de paroi.

5. Agencement selon l'une quelconque des revendications 1 à 4, **caractérisé en ce que** l'au moins une pompe (6) fait partie d'un module de préparation d'eau chaude (1).

6. Agencement selon l'une quelconque des revendications 1 à 5, **caractérisé en ce qu'**une pompe (6) pour l'eau chaude ou la vapeur peut être couplée à un élément de logement de serviette chaude (79) sous la forme d'un élément de raccord de pompe, une serviette rafraîchissante ou un essuie-main (80) pouvant être logés dans son espace de logement (81) afin d'être mis au contact de la température prédéfinie de l'eau chaude ou de la vapeur.

7. Agencement selon l'une quelconque des revendications 1 à 5, **caractérisé en ce que** l'élément de raccord de pompe est un récipient pour boire (8).
